# EUROPEAN PATENT APPLICATION

(11) **EP 4 576 754 A1**
(43) Date of publication of application: **25.06.2025**
(21) Application number: 23868414.6
(22) Date of filing: 24.08.2023
(51) Int. Cl.: H04M 1/72454, H04M 3/428

(54) **ELECTRONIC DEVICE AND METHOD OF CONTROLLING SAME**

(30) Priority: 20.09.2022 KR 20220118931
(71) Applicant: Samsung Electronics Co., Ltd., Suwon-si, Gyeonggi-do 16677 (KR)
(72) Inventor: NGUYEN, Nhat Anh, Liem Hanoi 11908 (VN); NGUYEN, Van Khanh, Liem Hanoi 11908 (VN); CHU, Thi Phuong, Liem Hanoi 11908 (VN)
(74) Representative: Gulde & Partner
(86) International application number: PCT/KR2023/012577
(87) International publication number: WO 2024/063357

(57) **Abstract**

The present electronic device comprises a memory, a communication interface, a display, and at least one processor which: requests a call connection to an external device via the communication interface; when a phone non-connection event stored in the memory is identified after the call connection is requested, calculates an importance level corresponding to the phone non-connection event; if the importance level is equal to or greater than a threshold value, obtains state information of the electronic device indicating an application running in the electronic device; if it is identified, on the basis of the state information, that a pre-configured application is not running in the electronic device, obtains a notification time on the basis of situation information of a user of the external device; and controls the display to provide notification information indicating the phone non-connection event on the basis of the notification time.

## Description

### [Technical Field]

The disclosure relates to an electronic device and a method of controlling the same, and more particularly, to an electronic device that provides notification information indicating a call non-connection event to a user, and a method of controlling the same.

### [Background Art]

After a phone call connection is attempted, the phone call connection may not succeed according to various reasons.

In the case of an incoming phone call, an away message may be displayed on a smartphone in the case of failing to receive the counterpart's call. Accordingly, the user may attempt a phone call to the counterpart after seeing the away message. However, in case the user did not actually perform a phone call after seeing an away message, there is a problem that the user easily forgets that he/she should call the counterpart.

In the case of an outgoing phone call, an away message is displayed to the counterpart in case the counterpart failed to receive the call, but a notification that a call connection with the counterpart did not succeed may not be displayed on the smartphone of the user who made the call. Accordingly, there is a problem that the user easily forgets that he/she should call the counterpart again.

### [Disclosure]

### [Technical Solution]

The disclosure was devised for improving the aforementioned problems, and the purpose of the disclosure is in providing an electronic device that provides notification information in consideration of the user's situation regarding a call non-connection event, and a method of controlling the same.

An electronic device according to an embodiment of the disclosure includes memory, a communication interface, a display, and at least one processor configured to request a call connection to an external device via the communication interface, and based on identifying a call non-connection event stored in the memory after requesting the call connection, calculate an importance level corresponding to the call non-connection event, and based on the importance level being greater than or equal to a threshold value, obtain state information of the electronic device indicating an application that is being executed in the electronic device, and based on identifying that a predetermined application is not being executed in the electronic device on the basis of the state information, obtain a notification time on the basis of situation information of a user of the external device, and control the display to provide notification information indicating the call non-connection event based on the notification time.

Meanwhile, the at least one processor may, based on identifying the call non-connection event, obtain at least one of contact number level information for the external device or communication frequency with the external device, and calculate the importance level based on at least one of the contact number level information or the communication frequency.

Meanwhile, the at least one processor may, based on identifying the call non-connection event, obtain a first parameter corresponding to the contact number level information and a second parameter corresponding to the communication frequency, and calculate the importance level based on the first parameter, a first weight corresponding to the first parameter, the second parameter, and a second weight corresponding to the second parameter.

Meanwhile, the at least one processor may identify a category of the call non-connection event, and calculate the importance level based on the identified category, and the category may include at least one of an absence event, a rejection event, or a connection failure event.

Meanwhile, the predetermined application may be an application that performs a function that cannot be performed simultaneously with a call connection function.

Meanwhile, the at least one processor may, based on identifying that the predetermined application is not being executed, identify whether an input of the user was received from the external device within a threshold time, and based on identifying that an input of the user was received from the external device within the threshold time, set the notification time as the current time point.

Meanwhile, the at least one processor may, based on identifying that the predetermined application is not being executed, obtain schedule information of the user, and based on a schedule reserved on the current time point not existing on the basis of the schedule information of the user, set the notification time as the current time point, and based on a schedule reserved on the current time point existing on the basis of the schedule information of the user, set the notification time as a time point when the reserved schedule passed.

Meanwhile, the at least one processor may, based on receiving a user input for a call connection with the external device through the notification information, re-request a call connection with the external device through the communication interface.

Meanwhile, the notification information may include at least one of a reason for the call non-connection event, a message received from the external device, a call available time, or a notification time.

Meanwhile, the at least one processor may receive a call available time from the external device through the communication interface, and control the display to provide the notification information including the call available time.

A method of controlling an electronic device according to an embodiment of the disclosure may include the steps of requesting a call connection to an external device, and based on identifying a call non-connection event stored in the electronic device after requesting the call connection, calculating an importance level corresponding to the call non-connection event, and based on the importance level being greater than or equal to a threshold value, obtaining state information of the electronic device indicating an application that is being executed in the electronic device, and based on identifying that a predetermined application is not being executed in the electronic device on the basis of the state information, obtaining a notification time on the basis of situation information of a user of the external device, and providing notification information indicating the call non-connection event based on the notification time.

Meanwhile, in the step of obtaining the importance level, based on identifying the call non-connection event, at least one of contact number level information for the external device or communication frequency with the external device may be obtained, and the importance level may be calculated based on at least one of the contact number level information or the communication frequency.

Meanwhile, in the step of obtaining the importance level, based on identifying the call non-connection event, a first parameter corresponding to the contact number level information and a second parameter corresponding to the communication frequency may be obtained, and the importance level may be calculated based on the first parameter, a first weight corresponding to the first parameter, the second parameter, and a second weight corresponding to the second parameter.

Meanwhile, in the step of obtaining the importance level, a category of the call non-connection event may be identified, and the importance level may be calculated based on the identified category, and the category may include at least one of an absence event, a rejection event, or a connection failure event.

Meanwhile, the predetermined application may be an application that performs a function that cannot be performed simultaneously with a call connection function.

Meanwhile, in the step of obtaining the notification time, based on identifying that the predetermined application is not being executed, it may be identified whether an input of the user was received from the external device within a threshold time, and based on identifying that an input of the user was received from the external device within the threshold time, the notification time may be set as the current time point.

Meanwhile, in the step of obtaining the notification time, based on identifying that the predetermined application is not being executed, schedule information of the user may be obtained, and based on a schedule reserved on the current time point not existing on the basis of the schedule information of the user, the notification time may be set as the current time point, and based on a schedule reserved on the current time point existing on the basis of the schedule information of the user, the notification time may be set as a time point when the reserved schedule passed.

Meanwhile, in the controlling method, based on receiving a user input for a call connection with the external device through the notification information, a call connection with the external device may be re-requested through the communication interface.

Meanwhile, the notification information may include at least one of a reason for the call non-connection event, a message received from the external device, a call available time, or a notification time.

Meanwhile, in the step of providing the notification information, a call available time may be received from the external device, and the notification information including the call available time may be provided.

### [Description of Drawings]

FIG. 1 is a block diagram illustrating an electronic device according to an embodiment of the disclosure;
FIG. 2 is a block diagram for illustrating a detailed configuration of the electronic device according to an embodiment of the disclosure;
FIG. 3 is a flow chart for illustrating an operation of providing notification information according to a call non-connection event;
FIG. 4 is a flow chart for illustrating a method of providing notification information;
FIG. 5 is a flow chart for illustrating a time of providing notification information;
FIG. 6 is a flow chart for illustrating an operation of identifying a call non-connection event according to various embodiments;
FIG. 7 is a flow chart for illustrating an operation of identifying a call non-connection event according to various embodiments;
FIG. 8 is a flow chart for illustrating an operation of identifying a call non-connection event according to various embodiments;
FIG. 9 is a flow chart for illustrating an operation of identifying a call non-connection event according to various embodiments;
FIG. 10 is a flow chart for illustrating an operation of identifying a call non-connection event according to various embodiments;
FIG. 11 is a flow chart for illustrating an operation of identifying a call non-connection event according to various embodiments;
FIG. 12 is a flow chart for illustrating an operation of calculating an importance level corresponding to an event;
FIG. 13 is a flow chart for illustrating an operation of an electronic device according to a type of an event;
FIG. 14 is a flow chart for illustrating an operation of an electronic device according to an incoming call event;
FIG. 15 is a flow chart for illustrating an operation of an electronic device according to an outgoing call event;
FIG. 16 is a flow chart for illustrating an operation of an electronic device according to whether a call is connected with an external device;
FIG. 17 is a flow chart for illustrating an operation related to retrial of a call connection;
FIG. 18 is a diagram for illustrating a call non-connection event;
FIG. 19 is a diagram for illustrating parameters for calculation of an importance level;
FIG. 20 is a diagram for illustrating state information of a device;
FIG. 21 is a diagram for illustrating an operation of analyzing situation information of a user;
FIG. 22 is a diagram for illustrating situation information of a user;
FIG. 23 is a flow chart for illustrating an operation of an electronic device providing notification information based on information received from an external device;
FIG. 24 is a diagram for illustrating notification information provided according to an importance level;
FIG. 25 is a diagram for illustrating an operation of providing notification information according to various embodiments;
FIG. 26 is a diagram for illustrating an operation of providing notification information according to various embodiments;
FIG. 27 is a diagram for illustrating a user interface (UI) displayed during a call connection according to various embodiments;
FIG. 28 is a diagram for illustrating a user interface (UI) displayed during a call connection according to various embodiments;
FIG. 29 is a diagram for illustrating an operation of providing notification information according to various embodiments;
FIG. 30 is a diagram for illustrating an operation of providing notification information according to various embodiments;
FIG. 31 is a diagram for illustrating an operation of updating an existing notification information provision model by obtaining parameters;
FIG. 32 is a flow chart for illustrating an operation of providing notification information by using situation information of a user of an external device;
FIG. 33 is a diagram for illustrating an operation of providing notification information according to various embodiments;
FIG. 34 is a diagram for illustrating an operation of providing notification information according to various embodiments;
FIG. 35 is a diagram for illustrating an operation of providing notification information according to various embodiments;
FIG. 36 is a diagram for illustrating an operation of providing notification information according to various embodiments; and
FIG. 37 is a flow chart for illustrating a method of controlling an electronic device according to various embodiments.

### [Mode for Invention]

Hereinafter, the disclosure will be described in detail with reference to the accompanying drawings.

As terms used in the embodiments of the disclosure, general terms that are currently used widely were selected as far as possible, in consideration of the functions described in the disclosure. However, the terms may vary depending on the intention of those skilled in the art, previous court decisions, or emergence of new technologies, etc. Also, in particular cases, there may be terms that were arbitrarily designated by the applicant, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "include," and "may include" denote the existence of such characteristics (e.g.: elements such as numbers, functions, operations, and components), and do not exclude the existence of additional characteristics.

In addition, the expression "at least one of A and/or B" should be interpreted to mean any one of "A" or" B" or "A and B."

Further, the expressions "first," "second" and the like used in this specification may be used to describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, singular expressions include plural expressions, as long as they do not obviously mean differently in the context. In addition, in the disclosure, terms such as "include" and "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

Further, in the disclosure, "a module" or "a unit" may perform at least one function or operation, and may be implemented as hardware or software, or as a combination of hardware and software. Also, a plurality of "modules" or "units" may be integrated into at least one module and implemented as at least one processor (not shown), excluding "a module" or "a unit" that needs to be implemented as specific hardware.

In addition, in this specification, the term "user" may refer to a person who uses an electronic device or a device using an electronic device (e.g.: an artificial intelligence electronic device).

Hereinafter, an embodiment of the disclosure will be described in more detail with reference to the accompanying drawings.

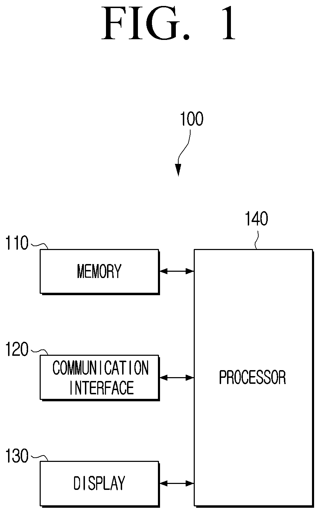

FIG. 1 is a block diagram illustrating an electronic device 100 according to an embodiment of the disclosure.

Referring to FIG. 1, the electronic device 100 includes memory 110, a communication interface 120, a display 130, and at least one processor 140.

The electronic device 100 may mean a smartphone, a tablet, a wearable device, etc. that perform a phone call function.

The memory 110 may store a plurality of predetermined call non-connection events, a function indicating a calculation method of an importance level, an analysis method for obtaining state information or situation information, a method of providing notification information, etc.

The communication interface 120 may perform a function of performing a call connection with an external device 200. The communication interface 120 may communicate with a server 300 for a call connection with the external device 200. The server 300 may mean a server of a communication company providing phone services between users. The user of the electronic device 100 will be described as a first user, and the user of the external device 200 will be described as a second user.

The at least one processor 140 may request a call connection to the external device 200 through the communication interface 120, and if a call non-connection event stored in the memory 110 is identified after requesting the call connection, calculate an importance level corresponding to the call non-connection event, and if the importance level is greater than or equal to a threshold value, obtain state information of the electronic device 100 indicating an application that is being executed in the electronic device 100, and if it is identified that a predetermined application is not being executed in the electronic device 100 based on the state information, obtain a notification time based on situation information of the user of the external device 200, and control the display 130 to provide notification information indicating the call non-connection event based on the notification time.

The call non-connection event may mean an event wherein a call connection was not normally performed. The call non-connection event may also be described as a call non-success event. The call non-connection event may be a predetermined event. The call non-connection event may mean at least one of an incoming call non-connection event or an outgoing call non-connection event. The incoming call non-connection event may mean an event wherein a call was received from the second user of the external device but the call was not connected. The outgoing call non-connection event may mean an event wherein the first user of the electronic device made an outgoing call, but the call was not connected.

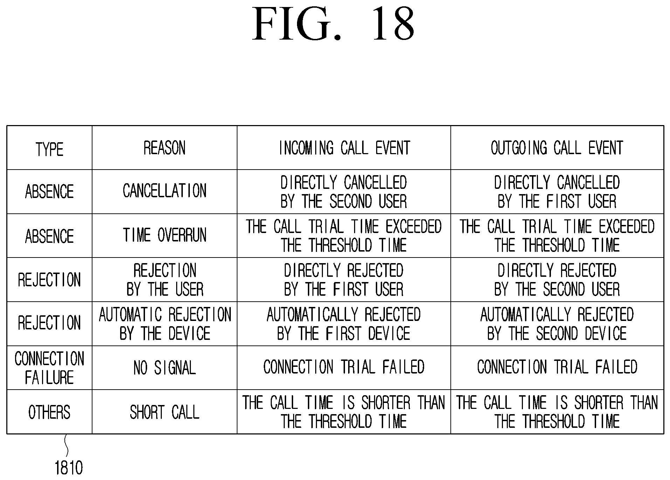

Situations identified as a call non-connection event may be various. For example, as a call non-connection event, a call during absence, receipt of an instruction to reject a call, inability to connect communication, etc. may exist. Detailed explanation related to a call non-connection event will be described in FIG. 18.

An importance level may mean a score indicating an importance level related to an identified event. The importance level may be described as an importance level value, evaluation, an evaluation value, etc. An importance level corresponding to a call non-connection event may mean the degree indicating how important the counterpart of the call non-connection event is to the user.

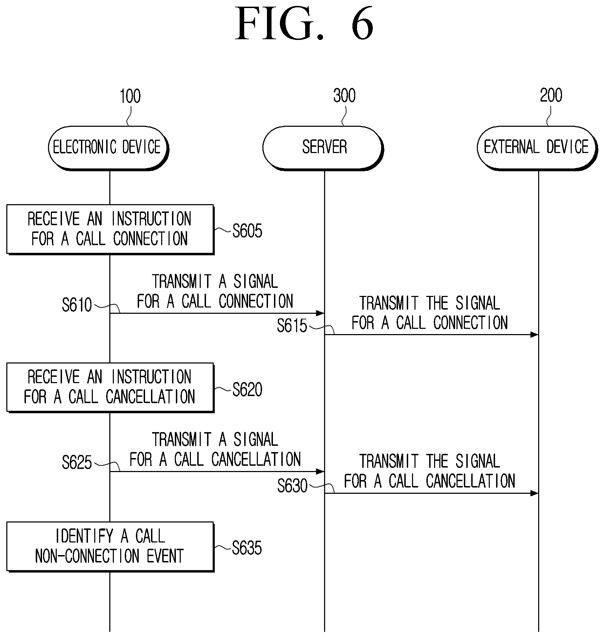

A situation wherein the first user of the electronic device 100 makes a phone call to the second user of the external device 200 is assumed. The at least one processor 140 may request a call connection to the external device 200 through the communication interface 120. Specifically, the at least one processor 140 may transmit a control signal for requesting a call connection to the external device 200. According to various embodiments, the at least one processor 140 may transmit a control signal to the external device 200 via the server 300. An operation of using the server 300 will be described in FIG. 6 to FIG. 11. According to various embodiments, the at least one processor 140 may directly transmit a control signal to the external device 200.

The at least one processor 140 may compare a calculated (or obtained) importance level and a predetermined threshold value. The predetermined threshold value may be a standard for determining whether it is necessary to notify occurrence of an event to the user. For example, it may not be necessary to repeatedly notify all calls during absence to the user. Accordingly, for repeatedly notifying only selected calls during absence to the user, the at least one processor 140 may provide notification information only for events of which importance levels are greater than or equal to the threshold value. The predetermined threshold value may be changed according to the user's setting.

Meanwhile, if a call non-connection event is identified, the at least one processor 140 may obtain at least one of contact number level information for the external device 200 or communication frequency with the external device 200, and calculate the importance level based on at least one of the contact number level information or the communication frequency.

Meanwhile, if a call non-connection event is identified, the at least one processor 140 may obtain a first parameter corresponding to the contact number level information and a second parameter corresponding to the communication frequency, and calculate the importance level based on the first parameter, a first weight corresponding to the first parameter, the second parameter, and a second weight corresponding to the second parameter.

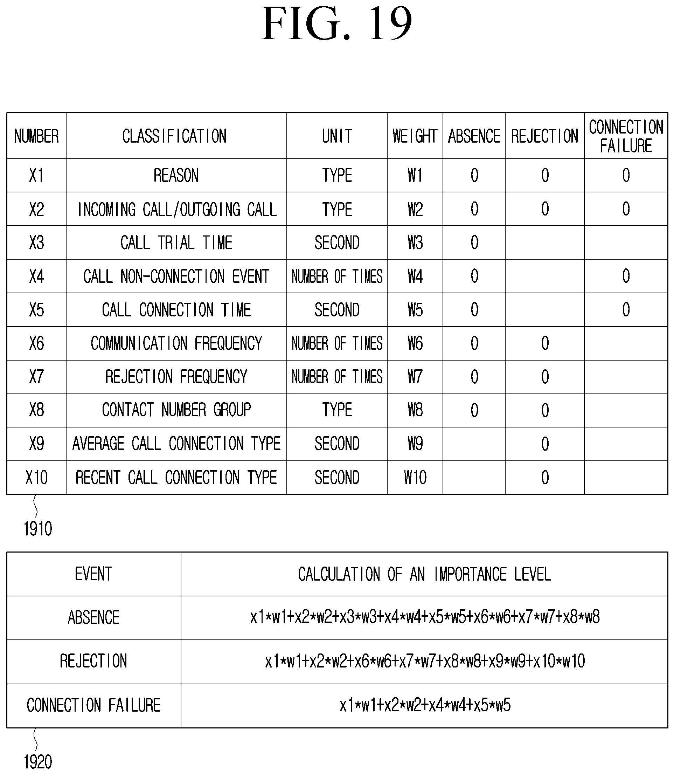

A process of calculating an importance level by using the parameters will be described in FIG. 19.

Meanwhile, the at least one processor 140 may identify a category of a call non-connection event, and calculate the importance level based on the identified category, and the category may include at least one of an absence event, a rejection event, or a connection failure event.

The state information of the electronic device 100 may include information related to the current state of the electronic device 100. Also, the state information of the electronic device 100 may include information related to the electronic device 100 on a time point when a call non-connection event occurred.

The state information of the electronic device 100 may include information related to hardware driven in the electronic device 100 (e.g., activation information of the microphone, power information of the display), information related to a specific mode driven in the electronic device 100 (e.g., a concentration mode, a do-not-disturb mode), information indicating an application installed in the electronic device 100, information indicating an application that is currently being executed in the electronic device 100, information indicating the remaining power of the electronic device 100, etc.

In the aforementioned description, information related to hardware and information indicating an application that is being executed were described separately. However, the at least one processor 140 may determine a state wherein the power of the display is turned on as a state wherein a predetermined application is being executed. This is because an operation of supplying power to the display can be performed in a specific application. Also, the at least one processor 140 may determine a state wherein the microphone 180 is activated as a state wherein the predetermined application is being executed. The state wherein the microphone 180 is activated may mean a state wherein the power of the microphone 180 is turned on.

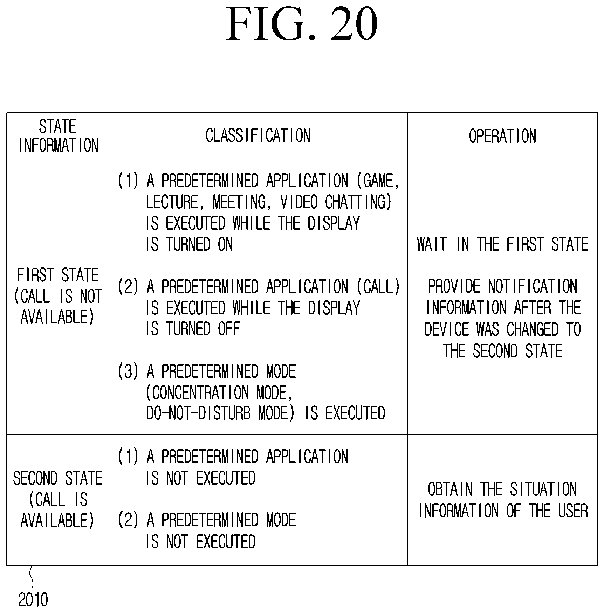

Detailed explanation related to the state information will be described in FIG. 20.

If an importance level of a call non-connection event is greater than or equal to a threshold value, the at least one processor 140 may determine that it is necessary to provide notification information regarding the call non-connection event to the user. In the case of providing notification information regarding all call non-connection events, the notification information may rather be recognized as spam. Accordingly, the at least one processor 140 may determine whether the predetermined application is currently being executed based on the state information of the electronic device 100.

According to various embodiments, the at least one processor 140 may additionally consider the second state information of the external device 200 as well as the first state information of the electronic device 100. Specifically, the at least one processor 140 may request state information (the second state information) to the external device 200. The external device 200 may transmit the second state information in response to the request of the electronic device 100. The at least one processor 140 may analyze the second state information. In case the external device 200 is not executing the predetermined application based on the second state information, the at least one processor 140 may obtain the notification time based on the situation information of the second user.

Meanwhile, the predetermined application may be an application that performs a function that cannot be performed simultaneously with a call connection function.

The function that cannot be performed simultaneously with the call connection function may mean an audio receiving function. Accordingly, the predetermined application may mean an application using the audio receiving function. The predetermined application may mean an application that receives a user voice through the microphone. For example, the predetermined application may mean a phone application, a video conference application, a voice chatting application, a game application using the microphone, etc.

The at least one processor 140 may determine whether the microphone 180 is currently activated based on the state information of the electronic device 100. In case the microphone 180 is activated, the at least one processor 140 may determine that the predetermined application is being executed. In case the microphone 180 is not activated, the at least one processor 140 may determine the notification time based on the situation information of the user.

If it is identified that the predetermined application is not being executed in the electronic device 100 based on the state information, the at least one processor 140 may request situation information to the external device 200 through the communication interface 120. Specifically, the at least one processor 140 may request the situation information of the user of the external device 200. In response to the request of the electronic device 100, the external device 200 may transmit the situation information of the second user to the electronic device 100. The at least one processor 140 may receive the situation information (the situation information of the second user) from the external device 200 through the communication interface 120. The at least one processor 140 may obtain the notification time based on the received situation information.

Meanwhile, if it is identified that the predetermined application is not being executed, the at least one processor 140 may identify whether an input of the user (the second user) was received from the external device 200 within a threshold time, and if it is identified that an input of the user (the second user) was received from the external device 200 within the threshold time, the at least one processor 140 may set the notification time as the current time point.

If it is identified that the predetermined application is not being executed, the at least one processor 140 may provide notification information to the user regarding a call non-connection event. Here, the at least one processor 140 may determine the notification time when the notification information will be provided to the user.

According to various embodiments, the at least one processor 140 may immediately provide the notification information on a time point when a call non-connection event occurred. However, on a time point when a call non-connection event occurred, even if notification information is provided, it may not be highly necessary that the user immediately recognizes this. This is because there is a high possibility that a call non-connection event may occur again even if a call connection is attempted again through the notification information. For example, even if a call is requested to the counterpart again through a notification regarding absence of the counterpart, there is a high possibility that the counterpart may not answer the phone.

Accordingly, the at least one processor 140 may determine the notification time when the notification information will be provided in consideration of the situation information of the user. Here, the situation information of the user may include at least one of situation information corresponding to the first user of the electronic device 100 (it can be described as the first situation information) or situation information corresponding to the second user of the external device 200 (it can be described as the second situation information).

According to various embodiments, the feature of determining the notification time in consideration of the second situation information of the second user will be described.

If it is identified that the predetermined application is not being executed, the at least one processor 140 may receive the situation information (the second situation information) of the user (the second user) of the external device 200 through the communication interface 120. Then, the at least one processor 140 may analyze the situation information.

Meanwhile, if it is identified that the predetermined application is not being executed, the at least one processor 140 may obtain schedule information of the second user, and if a schedule reserved on the current time point does not exist based on the schedule information of the second user, the at least one processor 140 may set the notification time as the current time point, and if a schedule reserved on the current time point exists based on the schedule information of the second user, the at least one processor 140 may set the notification time as a time point when the reserved schedule passed.

The at least one processor 140 may request the schedule information of the second user to the external device 200. The external device 200 may transmit the schedule information of the second user to the electronic device 100 in response to the request of the electronic device 100. The at least one processor 140 may receive the schedule information of the second user from the external device 200 through the communication interface 120.

According to various embodiments, the feature of determining the notification time in consideration of the first situation information of the first user and the second situation information of the second user will be described.

The at least one processor 140 may consider both of the first situation information of the first user and the second situation information of the second user in providing the notification information. This is because both of the first user and the second user need to be in a state wherein a call is possible in performing a call. In case an input of the first user (e.g., a touch input) is received from the electronic device 100, and an input of the second user (e.g., a touch input) is received from the external device 200 within the threshold time, the at least one processor 140 may determine the notification time as the current time.

If a user input is not identified in any one device from among the electronic device 100 or the external device 200, the at least one processor 140 may not provide the notification information until user inputs are received from both of the electronic device 100 and the external device 200 within the threshold time. Accordingly, the current time may not necessarily mean a time point when a call non-connection event occurred. The current time may mean a time point when it is determined whether to provide the notification information.

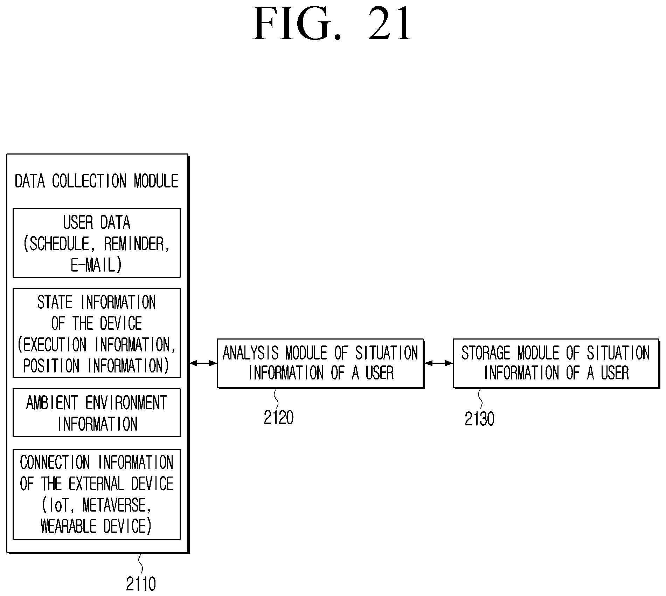

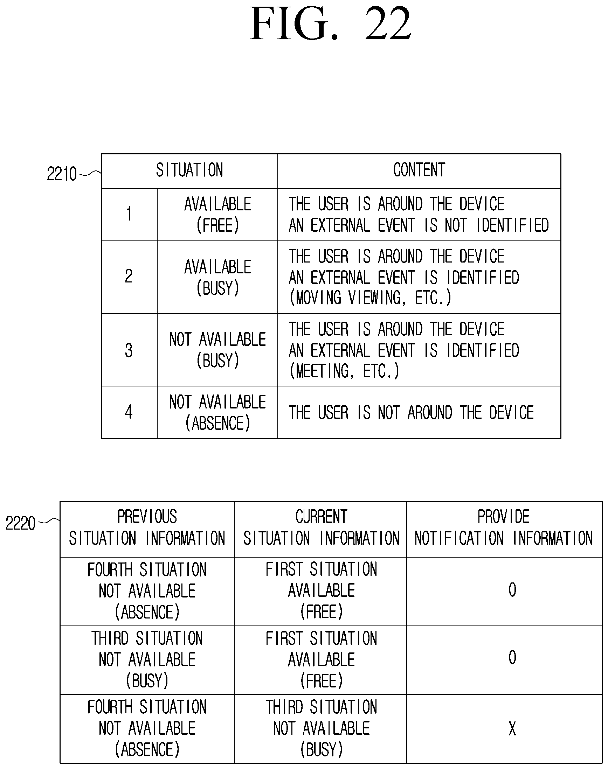

Detailed explanation related to the situation information will be described in FIG. 21 and FIG. 22.

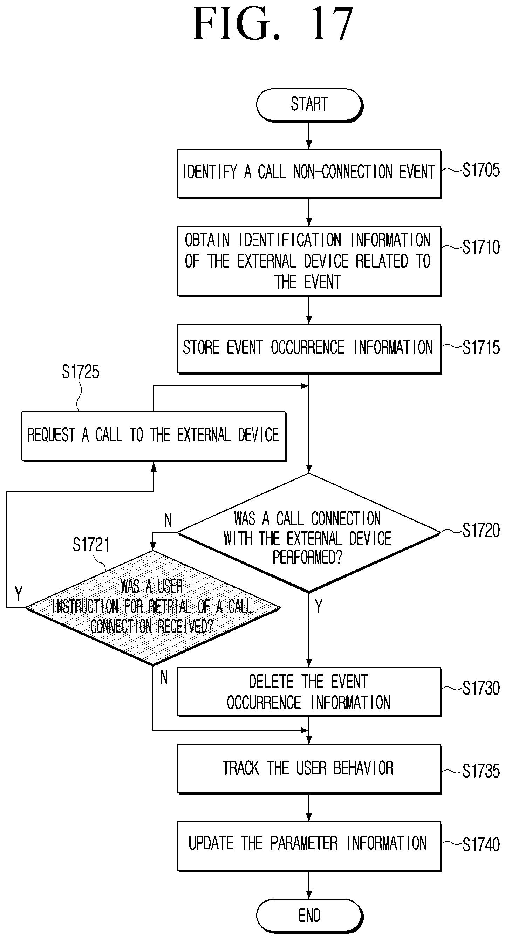

Meanwhile, if an input of a user (the first user) for a call connection with the external device 200 is received through the notification information, the at least one processor 140 may re-request a call connection with the external device 200 through the communication interface 120. Detailed explanation in this regard will be described in FIG. 17.

Meanwhile, the notification information may include at least one of a reason for the call non-connection event, a message received from the external device 200, a call available time, or a notification time.

Meanwhile, the at least one processor 140 may receive a call available time from the external device 200 through the communication interface 120, and control the display 130 to provide the notification information including the call available time.

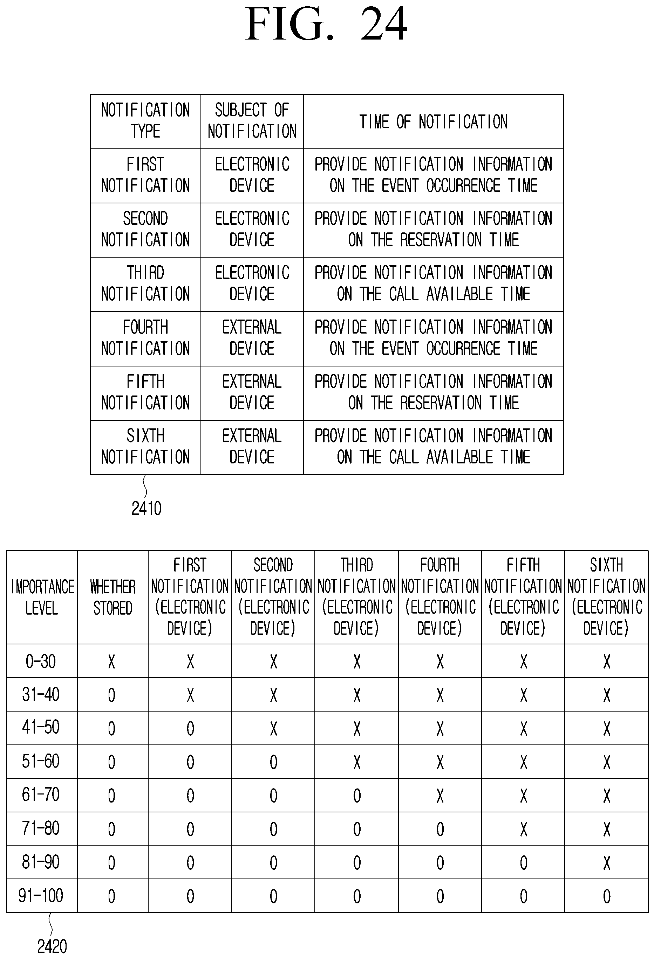

Detailed explanation related to a method of providing the notification information will be described in FIG. 24.

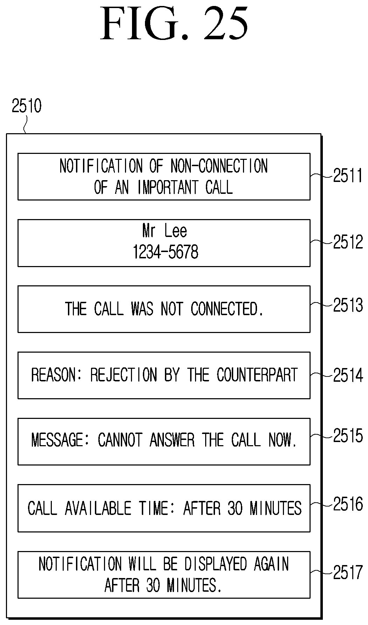

A UI related to various types of notification information will be described in FIG. 25 to FIG. 30 and FIG. 33 to FIG. 36.

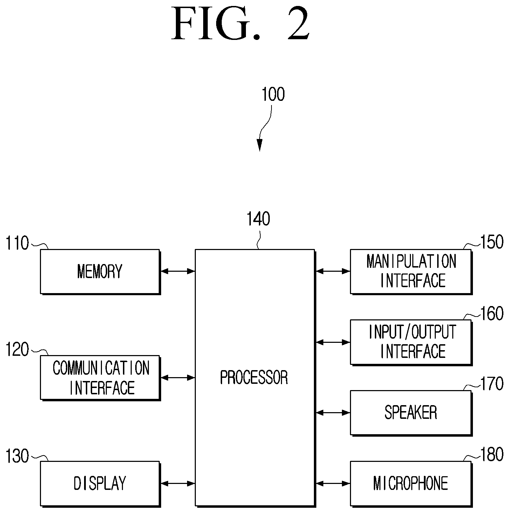

Meanwhile, in the above, only simple components constituting the electronic device 100 were illustrated and explained, but in actual implementation, various components may additionally be included. Explanation in this regard will be described below with reference to FIG. 2.

FIG. 2 is a block diagram for illustrating a detailed configuration of the electronic device 100 according to an embodiment of the disclosure.

Referring to FIG. 2, the electronic device 100 may include at least one of memory 110, a communication interface 120, a display 130, at least one processor 140, a manipulation interface 150, an input/output interface 160, a speaker 170, or a microphone 180.

Meanwhile, overlapping explanation regarding operations identical to those described above will be omitted.

An electronic device according to the various embodiments of this specification may include, for example, at least one of a smartphone, a tablet PC, a mobile phone, a video phone, an e-book reader, a desktop PC, a laptop PC, a netbook computer, a workstation, a server, a PDA, a portable multimedia player (PMP), an MP3 player, a medical device, a camera, or a wearable device. A wearable device may include at least one of an accessory-type device (e.g.: a watch, a ring, a bracelet, an ankle bracelet, a necklace, glasses, a contact lens, or a head-mounted-device (HMD)), a device integrated with fabrics or clothing (e.g.: electronic clothing), a body-attached device (e.g.: a skin pad or a tattoo), or an implantable circuit. Also, in some embodiments, an electronic device may include, for example, at least one of a television, a digital video disk (DVD) player, an audio, a refrigerator, an air conditioner, a cleaner, an oven, a microwave oven, a washing machine, an air purifier, a set top box, a home automation control panel, a security control panel, a media box (e.g.: Samsung HomeSync^{™}, Apple TV^{™}, or Google TV^{™}), a game console (e.g.: Xbox^{™}, PlayStation^{™}), an electronic dictionary, an electronic key, a camcorder, or an electronic photo frame.

The memory 110 may be implemented as internal memory such as ROM (e.g., electrically erasable programmable read-only memory (EEPROM)), RAM, etc., included in the at least one processor 140, or implemented as separate memory from the at least one processor 140. In this case, the memory 110 may be implemented in the form of memory embedded in the electronic device 100, or implemented in the form of memory that can be attached to or detached from the electronic device 100 according to the use of stored data. For example, in the case of data for driving the electronic device 100, the data may be stored in memory embedded in the electronic device 100, and in the case of data for an extended function of the electronic device 100, the data may be stored in memory that can be attached to or detached from the electronic device 100.

Meanwhile, in the case of memory embedded in the electronic device 100, the memory may be implemented as at least one of volatile memory (e.g.: dynamic RAM (DRAM), static RAM (SRAM), or synchronous dynamic RAM (SDRAM), etc.) or nonvolatile memory (e.g.: one time programmable ROM (OTPROM), programmable ROM (PROM), erasable and programmable ROM (EPROM), electrically erasable and programmable ROM (EEPROM), mask ROM, flash ROM, flash memory (e.g.: NAND flash or NOR flash, etc.), a hard drive, or a solid state drive (SSD)). Also, in the case of memory that can be attached to or detached from the electronic device 100, the memory may be implemented in forms such as a memory card (e.g., compact flash (CF), secure digital (SD), micro secure digital (Micro-SD), mini secure digital (Mini-SD), extreme digital (xD), a multimedia card (MMC), etc.) and external memory that can be connected to a USB port (e.g., a USB memory), etc.

The communication interface 120 is a component that performs communication with various types of external devices according to various types of communication methods. The communication interface 120 may include a wireless communication module or a wired communication module. Each communication module may be implemented in a form of at least one hardware chip.

A wireless communication module may be a module that communicates with an external device wirelessly. For example, a wireless communication module may include at least one module among a Wi-Fi module, a Bluetooth module, an infrared communication module, or other communication modules.

A Wi-Fi module and a Bluetooth module may perform communication by a Wi-Fi method and a Bluetooth method, respectively. In the case of using a Wi-Fi module or a Bluetooth module, various types of connection information such as a service set identifier (SSID) and a session key is transmitted and received first, and connection of communication is performed by using the information, and various types of information can be transmitted and received thereafter.

An infrared communication module performs communication according to an infrared Data Association (IrDA) technology of transmitting data to a near field wirelessly by using infrared rays between visible rays and millimeter waves.

Other communication modules may include at least one communication chip that performs communication according to various wireless communication protocols such as Zigbee, 3rd Generation (3G), 3rd Generation Partnership Project (3GPP), Long Term Evolution (LTE), LTE Advanced (LTE-A), 4th Generation (4G), 5th Generation (5G), etc. other than the aforementioned communication methods.

A wired communication module may be a module that communicates with an external device via wire. For example, a wired communication module may include at least one of a local area network (LAN) module, an Ethernet module, a pair cable, a coaxial cable, an optical fiber cable, or an ultra wide-band (UWB) module.

The display 130 may be implemented as displays in various forms such as a liquid crystal display (LCD), an organic light emitting diodes (OLED) display, a plasma display panel (PDP), etc. Inside the display 130, driving circuits that may be implemented in forms such as an amorphous silicon thin film transistor (a-si TFT), a low temperature poly silicon (LTPS) TFT, an organic TFT (OTFT), etc., and a backlight unit, etc. may also be included together. Meanwhile, the display 130 may be implemented as a touch screen combined with a touch sensor, a flexible display, a three-dimensional (3D) display, etc. Also, the display 130 according to an embodiment of the disclosure may include not only a display panel outputting images, but also a bezel housing the display panel. In particular, a bezel according to an embodiment of the disclosure may include a touch sensor (not shown) for detecting user interactions.

The manipulation interface 150 may be implemented as a device like a button, a touch pad, a mouse, and a keyboard, or as a touch screen that can perform both of the aforementioned display function and a manipulation input function. A button may be various types of buttons such as a mechanical button, a touch pad, a wheel, etc. formed in any areas such as the front surface part or the side surface part, the rear surface part, etc. of the exterior of the main body of the electronic device 100.

The input/output interface 160 may be an interface of any one of a high definition multimedia interface (HDMI), a mobile high-definition link (MHL), a universal serial bus (USB), a display port (DP), a Thunderbolt, a video graphics array (VGA) port, an RGB port, a D-subminiature (D-SUB), or a digital visual interface (DVI). The input/output interface 160 may input or output at least one of an audio signal or a video signal. Depending on implementation examples, the input/output interface 160 may include a port outputting only audio signals and a port outputting only video signals as separate ports, or it may be implemented as one port that inputs and outputs both audio signals and video signals. Meanwhile, the electronic device 100 may transmit at least one of an audio signal or a video signal to an external device (e.g., an external display device or an external speaker) through the input/output interface 160. Specifically, an output port included in the input/output interface 160 may be connected with an external device, and the electronic device 100 may transmit at least one of an audio signal or a video signal to the external device through the output port.

The input/output interface 160 may be connected with the communication interface. The input/output interface 160 may transmit information received from an external device to the communication interface, or transmit information received through the communication interface to the external device.

The speaker 170 may be a component that outputs not only various kinds of audio data but also various kinds of notification sounds or voice messages, etc.

The microphone 180 is a component for receiving an input of a user voice or other sounds, and converting them into audio data. The microphone 180 may receive a voice of a user in an activated state. For example, the microphone 180 may be formed as an integrated type integrated to the upper side or the front surface direction, the side surface direction, etc. of the electronic device 100. The microphone 180 may include various components such as a microphone collecting a user voice in an analogue form, an amp circuit amplifying the collected user voice, an A/D conversion circuit that samples the amplified user voice and converts the user voice into a digital signal, a filter circuit that removes noise components from the converted digital signal, etc.

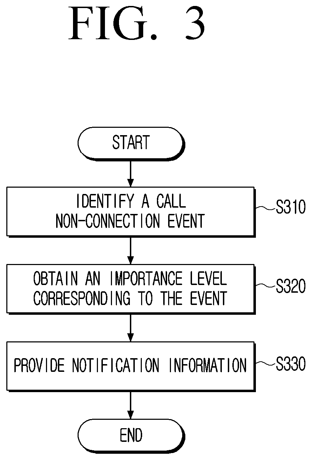

FIG. 3 is a flow chart for illustrating an operation of providing notification information according to a call non-connection event.

Referring to FIG. 3, the electronic device 100 may identify a call non-connection event in the step S310. The call non-connection event may mean an event wherein a call connection was not normally performed. The call non-connection event may also be described as a call non-success event. The call non-connection event may be a predetermined event. The call non-connection event may mean at least one of an incoming call non-connection event or an outgoing call non-connection event.

The electronic device 100 may obtain an importance level corresponding to the event in the step S320. The importance level may mean a score indicating an importance level related to the identified event. The importance level may be described as an importance level value, evaluation, an evaluation value, etc.

The electronic device 100 may provide notification information based on the importance level in the step S330. The providing operation may mean providing notification information to at least one of the first user of the electronic device or the second user of the external device. The electronic device 100 may determine a notification type based on the importance level.

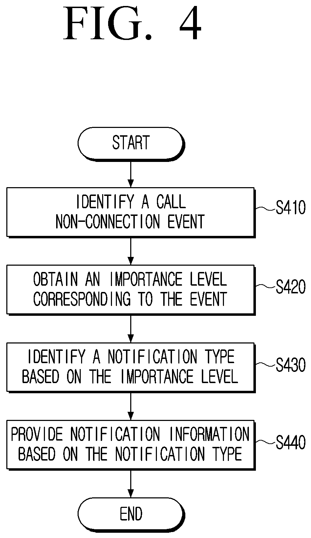

FIG. 4 is a flow chart for illustrating a method of providing notification information.

The steps S410 and S420 in FIG. 4 may correspond to the steps S310 and S320 in FIG. 3. Accordingly, overlapping explanation will be omitted.

After obtaining an importance level, the electronic device 100 may identify a notification type based on the importance level in the step S430. The notification type may include at least one of a notification target, a notification content, or a notification time. Detailed explanation related to a notification type will be described in FIG. 24.

The electronic device 100 may provide notification information based on the notification type in the step S440. The electronic device 100 may generate notification information according to the determined notification type. Then, the electronic device 100 may provide the generated notification information.

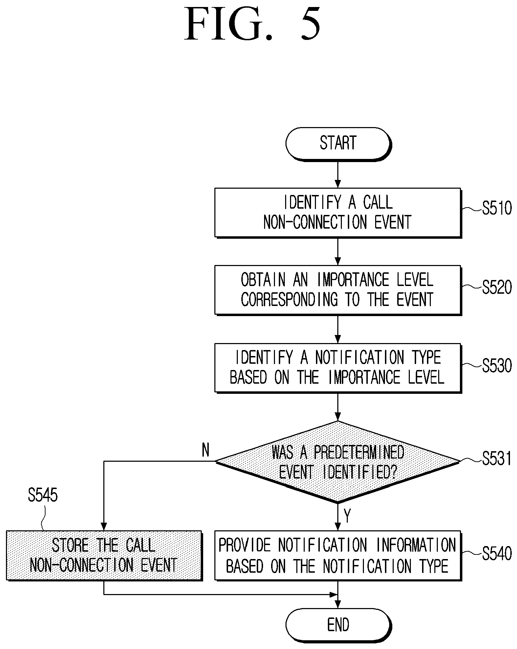

FIG. 5 is a flow chart for illustrating a time of providing notification information.

The steps S510, S520, S530, and S540 in FIG. 5 may correspond to the steps S410, S420, S430, S440 in FIG. 4.

After identifying the notification type, the electronic device 100 may determine whether a predetermined event is identified in the step S531. The predetermined event may mean an event wherein it is identified that a call with the user is possible. In the case of an incoming call non-connection event, the predetermined event may mean an event wherein it is identified that a call with the first user of the electronic device 100 is possible. The predetermined event may also be described as a predetermined situation.

In case the predetermined event is identified in the step S531-Y, the electronic device 100 may provide notification information based on the notification type in the step S540. In case the predetermined event is not identified in the step S531-N, the electronic device 100 may store a call non-connection event in the memory 110. After the call non-connection, the electronic device 100 may store the fact that the call was ultimately not connected in the memory 110. Afterwards, in case there is a request for additional checking from the user, the electronic device 100 may provide a list for the call non-connection events stored in the memory 110.

FIG. 6 is a flow chart for illustrating an operation of identifying a call non-connection event according to various embodiments.

Referring to FIG. 6, the electronic device 100 may receive an instruction for a call connection in the step S605. The electronic device 100 may transmit a signal for a call connection to the server 300 in the step S610. The server 300 may mean a server that provides a phone service between the electronic device 100 and the external device 200.

The server 300 may receive the signal for a call connection from the electronic device 100. The server 300 may transmit the signal for a call connection to the external device 200 in the step S615.

The external device 200 may receive from the server 300 the signal for a call connection transmitted from the electronic device 100. The second user of the external device 200 may determine whether to accept the call connection.

In a state wherein the second user did not accept the call connection, the first user of the electronic device 100 may cancel the call connection. The electronic device 100 may receive an instruction for a call cancellation in the step S620. The electronic device 100 may transmit a signal for a call cancellation to the external device 200 in the step S625.

The server 300 may receive the signal for a call cancellation from the electronic device 100. The server 300 may transmit the signal for a call cancellation to the external device 200 in the step S630.

After the instruction for a call cancellation is received, the electronic device 100 may identify a call non-connection event according to the instruction for a call cancellation in the step S635. In case the first user cancels the call connection, the electronic device 100 may identify that a call non-connection event was identified.

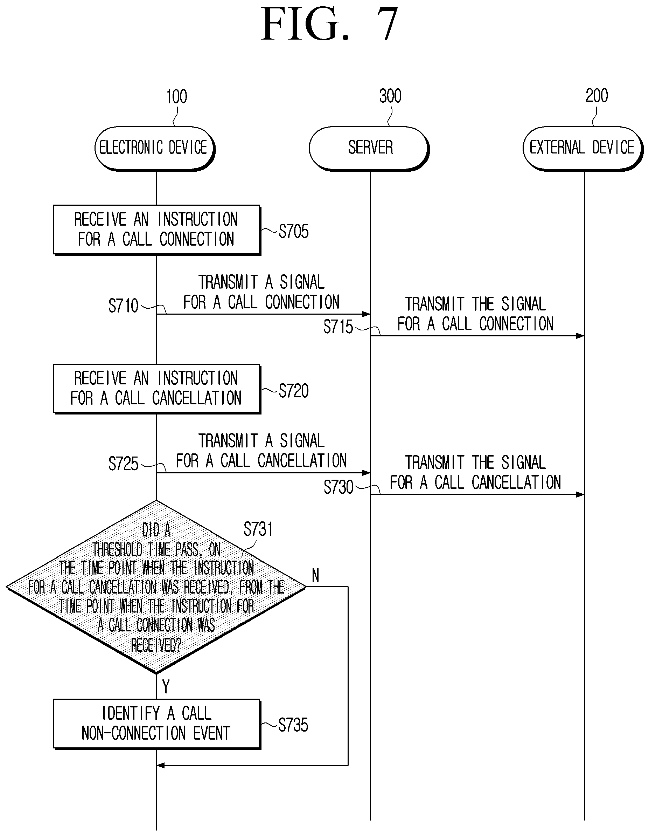

FIG. 7 is a flow chart for illustrating an operation of identifying a call non-connection event according to various embodiments.

The steps S705, S710, S715, S720, S725, S730, and S735 in FIG. 7 may correspond to the steps S605, S610, S615, S620, S625, S630, and S635 in FIG. 6. Accordingly, overlapping explanation will be omitted.

After an instruction for a call cancellation is received, the electronic device 100 may identify, on the time point when the instruction for a call cancellation was received, whether a threshold time passed from the time point when an instruction for a call connection was received in the step S731.

In case the threshold time passed in the step S731-Y, the electronic device 100 may identify a call non-connection event in the step S735.

In case the threshold time did not pass in the step S731-N, the electronic device 100 may determine that a call non-connection event did not occur. This is because the call connection itself may have been a wrong attempt.

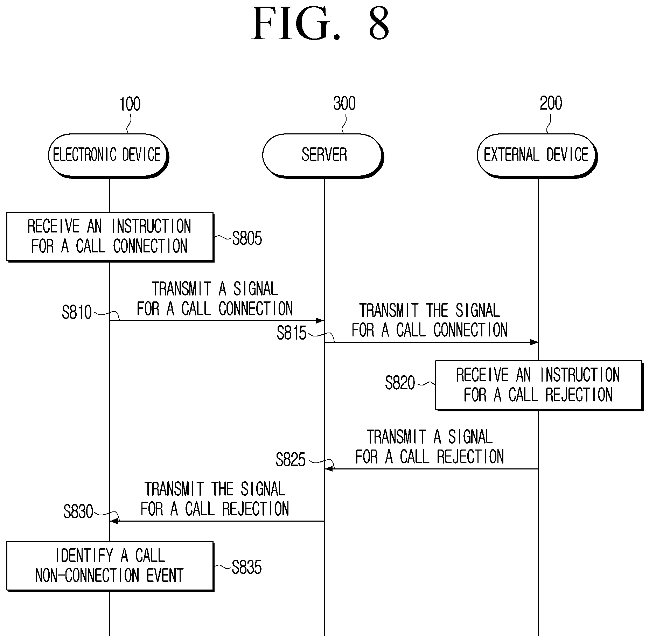

FIG. 8 is a flow chart for illustrating an operation of identifying a call non-connection event according to various embodiments.

The steps S805, S810, and S815 in FIG. 8 may correspond to the steps S605, S610, and S615 in FIG. 6. Accordingly, overlapping explanation will be omitted.

After receiving an attempt for a call connection by the electronic device 100, the external device 200 may receive an instruction for a call rejection by the second user in the step S820. The second user may reject the request for a call connection of the first user. The external device 200 may transmit a signal for a call rejection to the server 300 in the step S825.

The server 300 may receive the signal for a call rejection from the external device 200. The server 300 may transmit the signal for a call rejection to the electronic device 100 in the step S830.

The electronic device 100 may receive the signal for a call rejection from the external device 200. The electronic device 100 may identify a call non-connection event based on the signal for a call rejection in the step S835. When the signal for a call rejection is received from the server 300, the electronic device 100 may identify that a call non-connection event occurred.

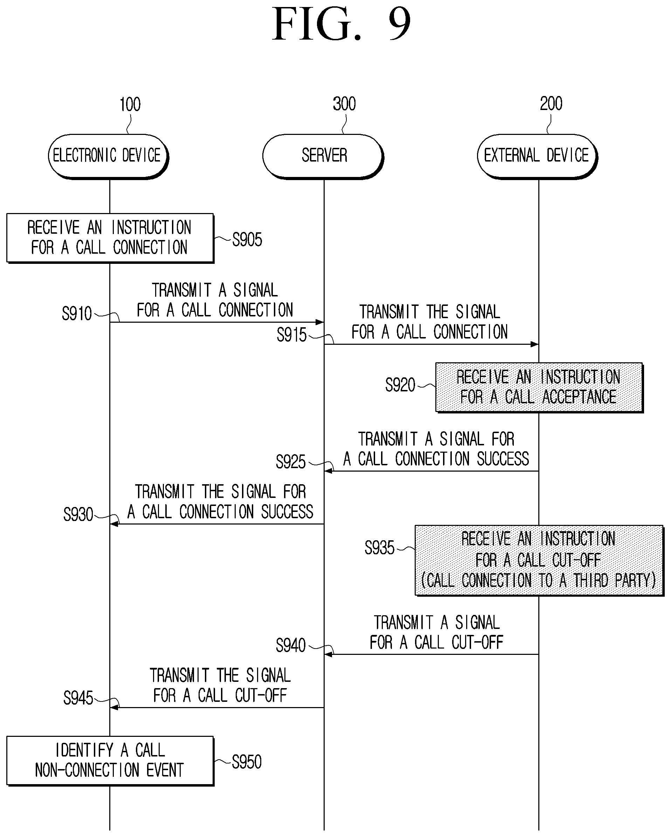

FIG. 9 is a flow chart for illustrating an operation of identifying a call non-connection event according to various embodiments.

The steps S905, S910, and S915 in FIG. 9 may correspond to the steps S605, S610, and S615 in FIG. 6. Accordingly, overlapping explanation will be omitted.

After receiving an attempt for a call connection by the electronic device 100, the external device 200 may receive an instruction for a call acceptance in the step S920. The external device 200 may transmit a signal for a call connection success to the server 300 in the step S925.

The server 300 may receive the signal for a call connection success from the external device 200. The server 300 may transmit the signal for a call connection success to the electronic device 100 in the step S930.

The external device 200 may receive an instruction for a call cut-off during a call connection with the electronic device 100 in the step S935. The instruction for a call cut-off may mean an instruction for cutting off the current phone call as a call request of a third party was newly received. The external device 200 may transmit a signal for a call cut-off to the server 300 in the step S940.

The server 300 may receive the signal for a call cut-off from the external device 200. The server 300 may transmit the signal for a call cut-off to the electronic device 100 in the step S945.

The electronic device 100 may receive the signal for a call cut-off from the server 300. The electronic device 100 may identify a call non-connection event based on the signal for a call cut-off in the step S950. When the signal for a call cut-off is received, the electronic device 100 may identify that a call non-connection event occurred. The signal for a call cut-off may mean a signal indicating a situation distinguished from a situation wherein the second user simply ended a call.

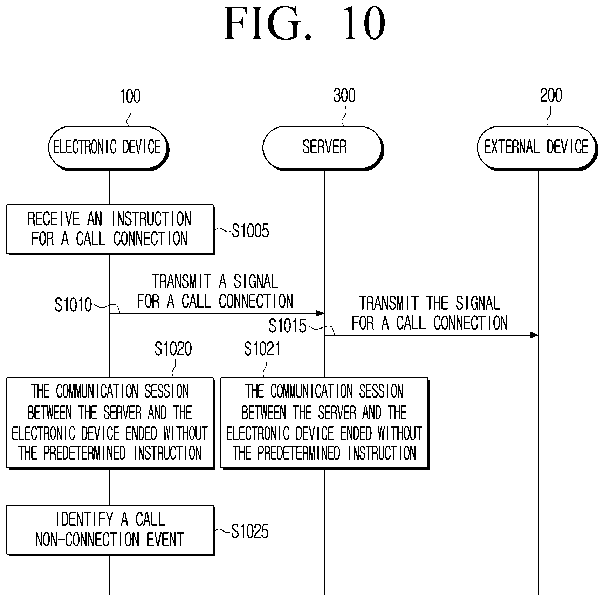

FIG. 10 is a flow chart for illustrating an operation of identifying a call non-connection event according to various embodiments.

The steps S1005, S1010, and S1015 in FIG. 10 may correspond to the steps S605, S610, and S615 in FIG. 6. Accordingly, overlapping explanation will be omitted.

After an instruction for a call connection is received, a communication session between the server 300 and the electronic device 100 may end without a predetermined instruction. The electronic device 100 may identify that the communication session with the server 300 ended without the predetermined instruction in the step S1020. Also, the server 300 may identify that the communication session with the electronic device 100 ended without the predetermined instruction in the step S1021.

In case the communication session with the server 300 ended without the predetermined instruction, the electronic device 100 may identify that a call non-connection event occurred in the step S1025.

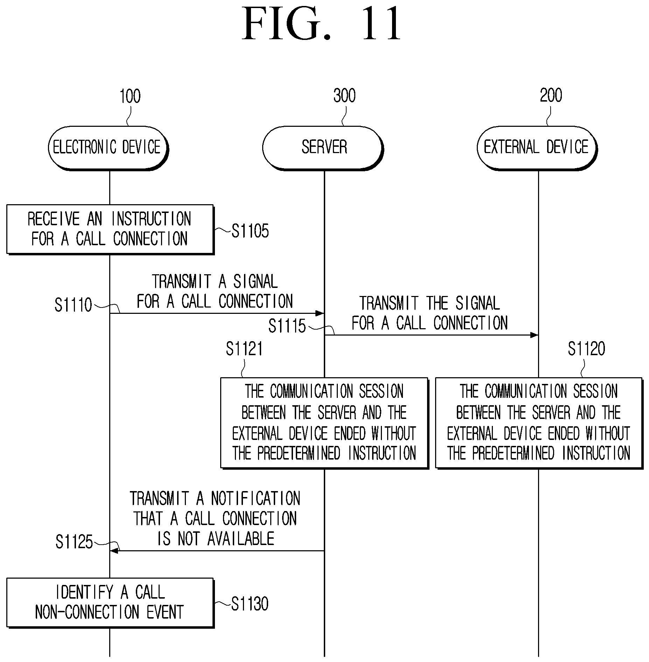

FIG. 11 is a flow chart for illustrating an operation of identifying a call non-connection event according to various embodiments.

The steps S1105, S1110, and S1115 in FIG. 11 may correspond to the steps S605, S610, and S615 in FIG. 6. Accordingly, overlapping explanation will be omitted.

After an instruction for a call connection is received, a communication session between the server 300 and the external device 200 may end without a predetermined instruction. The external device 200 may identify that the communication session with the server 300 ended without the predetermined instruction in the step S1120.

In case the communication session with the server 300 ended without the predetermined instruction, the external device 200 may identify that a call non-connection event occurred in the step S1120. Also, the server 300 may identify that the communication session with the external device 200 ended without the predetermined instruction in the step S1121.

After the communication session ends, the server 300 may transmit a notification notifying that a call connection is impossible to the electronic device 100 in the step S1125. The notification notifying that a call connection is impossible may also be described as a signal indicating that a call connection is impossible.

The electronic device 100 may receive the notification notifying that a call connection is impossible from the server 300. When the notification notifying that a call connection is impossible is received, the electronic device 100 may identify that a call non-connection event occurred.

Meanwhile, from below, explanation will be described while omitting the configuration of the server 300. Depending on implementation examples, the server 300 was not described in the following description, but the server 300 may be used in performing communication between the electronic device 100 and the external device 200.

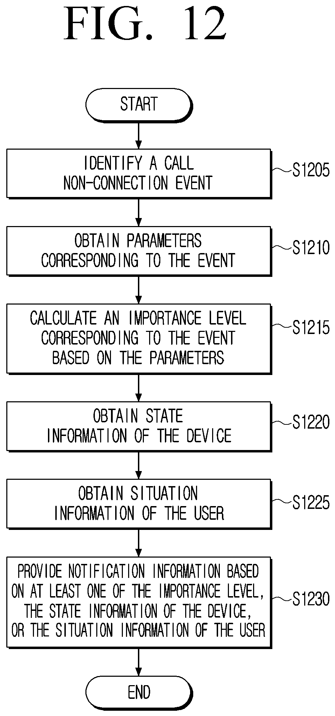

FIG. 12 is a flow chart for illustrating an operation of calculating an importance level corresponding to an event.

Referring to FIG. 12, the electronic device 100 may identify a call non-connection event in the step S1205. The electronic device 100 may obtain parameters corresponding to the event in the step S1210. The parameters may also be described as parameter information. Detailed explanation in this regard will be described in the table 1910 in FIG. 19.

The electronic device 100 may calculate an importance level corresponding to the event based on the parameters in the step S1215. The electronic device 100 may obtain state information of the device in the step S1220. The state information may include at least one of state information of the electronic device 100 or state information of the external device 200.

The electronic device 100 may obtain situation information of the user in the step S1225. The situation information may include at least one of situation information of the first user using the electronic device 100 or situation information of the second user using the external device 200.

The electronic device 100 may provide notification information based on at least one of the importance level, the state information of the device, or the situation information of the user in the step S1230.

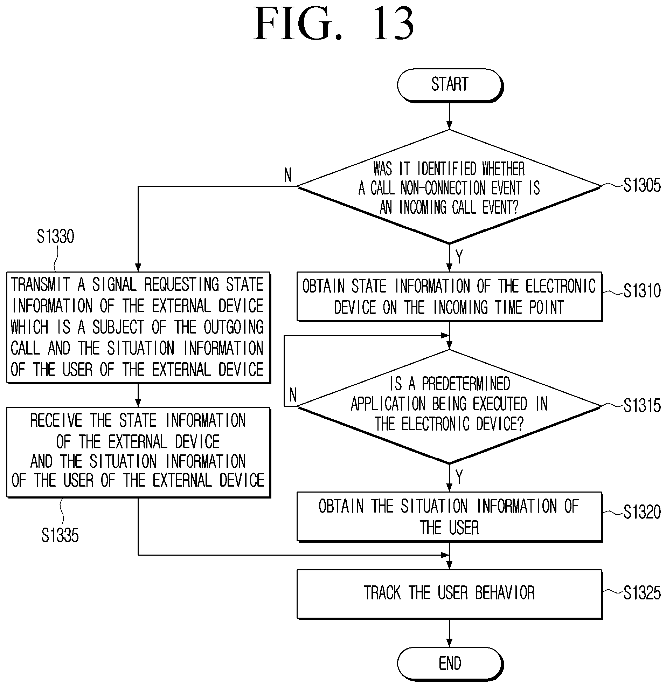

FIG. 13 is a flow chart for illustrating an operation of the electronic device 100 accord ing to a type of an event.

Referring to FIG. 13, the electronic device 100 may identify whether a call non-connection event is an incoming call event in the step S1305. In case the call non-connection event is an incoming call event in the step S1305-Y, the electronic device 100 may obtain state information of the electronic device 100 on the incoming time point in the step S1310. The electronic device 100 may determine whether a predetermined application is being executed in the device based on the state information of the electronic device 100 in the step S1315.

In case the predetermined application is not being executed in the electronic device 100 in the step S1315-N, the electronic device 100 may wait until the predetermined application is finished.

In case the predetermined application is being executed in the electronic device 100 in the step S1315-Y, the electronic device 100 may obtain situation information of the user (the first user) in the step S1320. The electronic device 100 may track the user behavior in the step S1325. The electronic device 100 may store and analyze which operation the user performs in the electronic device 100 after a call non-connection event occurs.

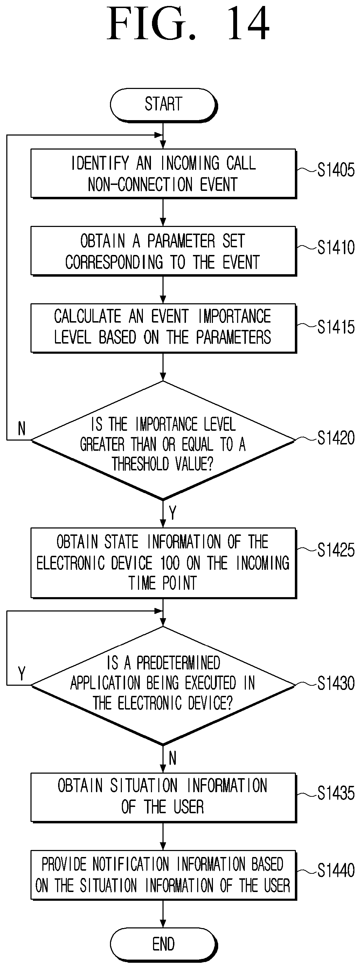

FIG. 14 is a flow chart for illustrating an operation of the electronic device 100 according to an incoming call event.

Referring to FIG. 14, the electronic device 100 may identify an incoming call non-connection event in the step S1405. The electronic device 100 may obtain a parameter set corresponding to the event in the step S1410. The electronic device 100 may calculate an event importance level (an importance level corresponding to the event) based on the parameters in the step S1415.

The electronic device 100 may identify whether the importance level is greater than or equal to a threshold value in the step S1420. If the importance level is not greater than or equal to the threshold value in the step S1420-N, the electronic device 100 may repeatedly perform the steps S1405 to S1420.

If the importance level is greater than or equal to the threshold value in the step S1420-Y, the electronic device 100 may obtain state information of the electronic device 100 on the incoming time point in the step S1425. The electronic device 100 may identify whether a predetermined application is being executed in the electronic device 100 based on the state information of the electronic device 100 in the step S1430.

In case the predetermined application is not being executed in the electronic device 100 in the step S1430-N, the electronic device 100 may wait until the predetermined application is finished.

In case the predetermined application is being executed in the electronic device 100 in the step S1430-Y, the electronic device 100 may obtain situation information of the user (the first user) in the step S1435. The electronic device 100 may provide notification information based on the situation information of the user in the step S1440.

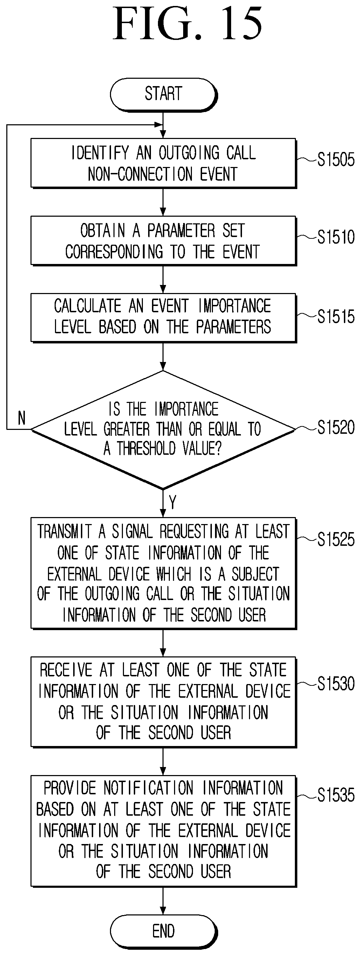

FIG. 15 is a flow chart for illustrating an operation of the electronic device 100 accord ing to an outgoing call event.

Referring to FIG. 15, the electronic device 100 may identify an outgoing call non-connection event in the step S1505. The electronic device 100 may obtain a parameter set corresponding to the event in the step S1510. The electronic device 100 may calculate an event importance level (an importance level corresponding to the event) based on the parameters in the step S1515.

The electronic device 100 may identify whether the importance level is greater than or equal to a threshold value in the step S1520. If the importance level is not greater than or equal to the threshold value in the step S1520-N, the electronic device 100 may repeatedly perform the steps S1505 to S1520.

If the importance level is greater than or equal to the threshold value in the step S1520-Y, the electronic device 100 may transmit a signal requesting at least one of the state information of the external device 200 which is the subject of the outgoing call or the situation information of the second user to the external device 200 in the step S1525.

The electronic device 100 may receive at least one of the state information of the external device 200 or the situation information of the second user from the external device 200 in the step S1530. The electronic device 100 may provide notification information based on at least one of the state information of the external device 200 or the situation information of the second user in the step S1535.

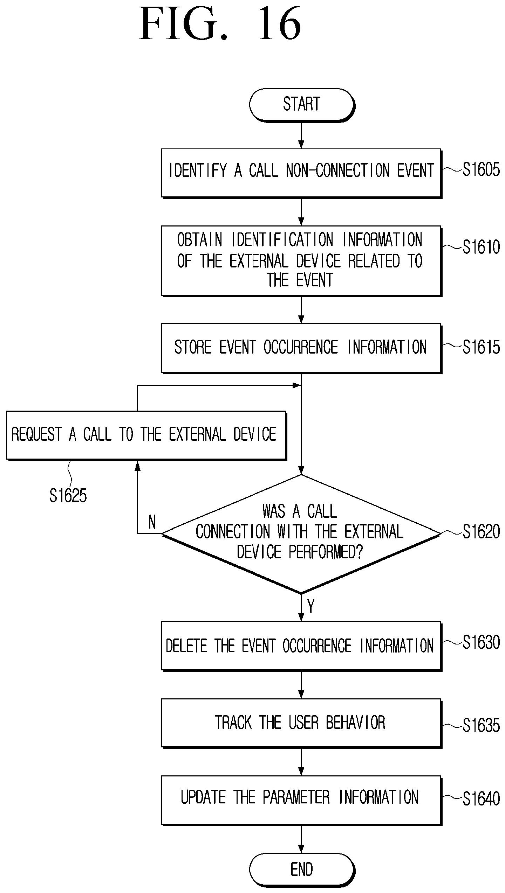

FIG. 16 is a flow chart for illustrating an operation of the electronic device 100 accord ing to whether a call is connected with an external device.

Referring to FIG. 16, the electronic device 100 may identify a call non-connection event in the step S1605. The electronic device 100 may obtain identification information of the external device 200 related to the call non-connection event in the step S1610. The electronic device 100 may store event occurrence information including the identification information in the memory 110 in the step S1615.

The electronic device 100 may identify whether a call was connected with the external device 200 after occurrence of the event in the step S1620. After a threshold time passed after the occurrence of the event, the electronic device 100 may determine whether a call connection with the external device 200 was performed.

If a call connection with the external device 200 was not performed after the occurrence of the event in the step S1620-N, the electronic device 100 may request a call to the external device 200 in the step S1625. Then, the electronic device 100 may perform the step S1620.

According to various embodiments, in case a call connection was not performed even though call requests were made by greater than or equal to a threshold number of times, the electronic device 100 may immediately perform the steps S1635 and S1640.

According to various embodiments, the electronic device 100 may immediately perform the steps S1635 and S1640 without performing the step S1625.

If a call connection with the external device 200 was performed after the occurrence of the event in the step S1620-Y, the electronic device 100 may delete event occurrence information from the memory 110 in the step S1630. The electronic device 100 may track the user behavior in the step S1635. The electronic device 100 may update the parameter information based on an analysis result of tracking the user behavior in the step S1640. For example, the electronic device 100 may change weights corresponding to the parameters based on a result of monitoring the user behavior.

FIG. 17 is a flow chart for illustrating an operation related to retrial of a call connection.

The steps S1705, S1710, S1715, S1720, S1725, S1730, S1735, and S1740 in FIG. 17 may correspond to the steps S1605, S1610, S1615, S1620, S1625, S1630, S1635, and S1640 in FIG. 16. Accordingly, overlapping explanation will be omitted.

In case a call connection with an external device was not performed, the electronic device 100 may determine whether a user instruction for retrial of a call connection was received in the step S1721. The electronic device 100 may provide a guide UI for retrial of a call connection to the user (the first user). Then, the user may input an instruction for retrial of a call connection into the electronic device 100 through the UI.

In case a user instruction for retrial of a call connection was received in the step S1721-Y, the electronic device 100 may perform the step S1725. In case a user instruction for retrial of a call connection was not received in the step S1721-N, the electronic device 100 may perform the steps S1735 and S1740.

FIG. 18 is a diagram for illustrating a call non-connection event.

The table 1810 in FIG. 18 indicates types, reasons, and event contents of call non-connection events.

Types of call non-connection events may be at least one of absence, rejection, connection failure, or others. Absence indicates that an operation of attempting a call connection was cancelled after a call connection was attempted. Rejection indicates that an instruction for a call rejection by the user was received after a call connection was attempted. Connection failure may indicate that a call connection ended even though a predetermined instruction (e.g., a user instruction) was not received.

Reasons for call non-connection events may be divided according to types. Reasons for an absence type may be cancellation or time overrun, etc.

Cancellation means that the user cancelled a call connection after attempting a call connection. In case an attempt for a call connection was received from the external device 200, but the second user of the external device 200 directly cancelled the attempt for a call connection, the electronic device 100 may identify that a call non-connection event (absence) occurred. In case a call connection to the external device 200 was attempted, but the first user of the electronic device 100 directly cancelled the attempt for a call connection, the electronic device 100 may identify that a call non-connection event (absence) occurred.

Time overrun indicates that a call connection was not performed after the threshold time passed from the time point when the call connection was attempted. When the threshold time passes, the user may directly cancel the call. Also, when the threshold time passes, a guide that the call connection cannot be performed may be provided to the user. In case an attempt for a call connection was received from the external device 200, but the attempt for a call connection passed the threshold time and the call connection was not performed, the electronic device 100 may identify that a call non-connection event (absence) occurred. In case a call connection to the external device 200 was attempted, but the attempt for a call connection passed the threshold time and the call connection was not performed, the electronic device 100 may identify that a call non-connection event (absence) occurred.

Reasons for a rejection type may be rejection by the user or automatic rejection by the device, etc.

Rejection by the user may indicate that the user directly rejected a call connection. In case an attempt for a call connection was received from the external device 200, but the first user of the electronic device 100 directly rejected the attempt for a call connection, the electronic device 100 may identify that a call non-connection event (rejection) occurred. In case a call connection to the external device 200 was attempted, but the second user of the external device 200 directly rejected the attempt for a call connection, the electronic device 100 may identify that a call non-connection event (rejection) occurred.

Automatic rejection by the device may mean that the device automatically notifies that a call connection cannot be performed. For example, as automatic rejection by the device, there may be a blocking function or a do-not-disturb function at a particular time, etc. In case an attempt for a call connection was received from the external device 200, but the electronic device 100 automatically rejected it, the electronic device 100 may identify that a call non-connection event (rejection) occurred. In case a call connection to the external device 200 was attempted, but the external device 200 automatically rejected it, the electronic device 100 may identify that a call non-connection event (rejection) occurred.

Reasons for connection failure may be absence of a signal, etc. In case a communication session is abruptly finished, a signal for connection may not be searched. In case an attempt for a call connection was received from the external device 200, but a signal for communicative connection was not searched without a predetermined instruction, the electronic device 100 may identify that a call non-connection event (connection failure) occurred. In case a call connection to the external device 200 was attempted, but a signal for communicative connection was not searched without a predetermined instruction, the electronic device 100 may identify that a call non-connection event (connection failure) occurred.

Reasons for others may be a short call, etc. In case a time of a phone call is smaller than a threshold time, the electronic device 100 may determine that the call was not normally connected. An event classified as a short call may be based on the premise that a call connection was performed for a pre-stored contact number.

In case an attempt for a call connection was received from the external device 200, and the call ended before a threshold time during the call connection, the electronic device 100 may identify that a call non-connection event (others) occurred. In case a call connection to the external device 200 was attempted, and the call ended before the threshold time during the call connection, the electronic device 100 may identify that a call non-connection event (others) occurred.

FIG. 19 is a diagram for illustrating parameters for calculation of an importance level.

The table 1910 in FIG. 19 indicates a plurality of parameters used in calculation of an importance level. The electronic device 100 may store weights w1-w10 corresponding to each parameter x1-x10. The electronic device 100 may apply different parameters according to types of call non-connection events.

According to various embodiments, if an absence event is identified, the electronic device 100 may use only some parameters x1 to x8 for calculating an importance level regarding the absence event.

According to various embodiments, if a rejection event is identified, the electronic device 100 may use only some parameters x1, x2, x6 to x10 for calculating an importance level regarding the rejection event.

According to various embodiments, if a connection failure event is identified, the electronic device 100 may use only some parameters x1, x2, x4, x5 for calculating an importance level regarding the connection failure event.

The table 1920 in FIG. 19 indicates a process of calculating an importance level according to types of call non-connection events. If an absence event is identified, the electronic device 100 may calculate an importance level corresponding to the absence event by using x1*w1+x2*w2+x3*w3+x4*w4+x5*w5+x6*w6+x7*w7+x8*w8. If a rejection event is identified, the electronic device 100 may calculate an importance level corresponding to the rejection event by using x1*w1+x2*w2+x6*w6+x7*w7+x8*w8+x9*w9+x10*w10. If a connection failure event is identified, the electronic device 100 may calculate an importance level corresponding to the connection failure event by using x1*w1+x2*w2+x4*w4+x5*w5.

FIG. 20 is a diagram for illustrating state information of a device.

The table 2010 in FIG. 20 indicates state information of the device. The state information of the device may indicate a first state (a call unavailable state) or a second state (a call available state). The device may include at least one of the electronic device 100 or the external device 200.

In case the display of the device is in a turned-on state and a predetermined application (a first application group) is being executed, the electronic device 100 may determine that the device is in the first state. For example, the predetermined application (the first application group) may include at least one of a game application, a lecture application, a meeting application, or a video chatting application. The feature that the display is in a turned-on state may mean a state wherein power was supplied to the display and a screen is being displayed.

In case the display of the device is in a turned-off state and a predetermined application (a second application group) is being executed, the electronic device 100 may determine that the device is in the second state. For example, the predetermined application (the second application group) may include a phone application, etc.

In case the device is executed in a predetermined mode, the electronic device 100 may determine that the device is in the first state. For example, the predetermined mode may include at least one of a concentration mode or a do-not-disturb mode.

In case the device is in the first state, the electronic device 100 may wait. Also, in case the device is changed to the second state, the electronic device 100 may provide notification information.

In case the predetermined application is not being executed in the device and the device is not executing the predetermined mode, the electronic device 100 may determine that the device is in the second state. Also, in case the device is in the second state, the electronic device 100 may obtain situation information of the user. Then, the electronic device 100 may determine whether to provide notification information regarding a call non-connection event based on the situation information of the user.

FIG. 21 is a diagram for illustrating an operation of analyzing situation information of a user.

Referring to FIG. 21, the electronic device 100 may include at least one of a data collection module 2110, an analysis module of situation information of a user 2120 or a storage module of situation information of a user 2130.

The data collection module 2110 may be a module that obtains various types of data used in analyzing situation information of a user.

The data collection module 2110 may obtain user data. The user data may include at least one of schedule information, reminder information, or e-mail information.

The data collection module 2110 may obtain state information of the device. The state information of the device may include at least one of execution information (execution of an application) or position information.

The data collection module 2110 may obtain ambient environment information. The ambient environment information may mean noise information or brightness information identified around the device.

The data collection module 2110 may obtain connection information of an external device. The connection information of an external device may include one of information related to connection with an Internet of Things (IoT), information related to connection with a metaverse server, or information related to connection with a wearable device.

The analysis module of situation information of a user 2120 may analyze the situation of the user based on various types of data obtained from the data collection module 2110.

For example, if a meeting schedule is included in a schedule included in the user data, the analysis module 2120 may determine that it is a situation wherein the user cannot perform a call connection during the time included in the meeting schedule.

For example, in case the device is executing the predetermined application, the analysis module 2120 may determine that it is a situation wherein the user cannot perform a call connection.

For example, if noises included in the ambient environment information are greater than or equal to a threshold value, the analysis module 2120 may determine that it is a situation wherein the user cannot perform a call connection. If the brightness included in the ambient environment information is smaller than the threshold value, the analysis module 2120 may determine that it is a situation wherein the user cannot perform a call connection.

For example, in case the device is connected to the metaverse server, the analysis module 2120 may determine that it is a situation wherein the user cannot perform a call connection.

The storage module of situation information of a user 2130 may store an analysis result obtained from the analysis module 2120. Then, the storage module 2130 may store the analysis result by dividing it into predetermined categories. The electronic device 100 may update the weights corresponding to the parameters based on the analysis result.

FIG. 22 is a diagram for illustrating situation information of a user.

The table 2210 in FIG. 22 indicates that situation information of the user is divided into predetermined categories.

The first situation indicates that it is a situation wherein a call is available and a call is free. For example, in case the user is around the device and an external event (a predetermined event) is not identified, the electronic device 100 may determine that it is the first situation.

The second situation indicates that it is a situation wherein a call is available but the user is busy. For example, in case the user is around the device and an external event (movie viewing, etc.) is identified, the electronic device 100 may determine that it is the second situation.

The third situation indicates that it is a situation wherein a call is unavailable and the user is busy. For example, in case the user is around the device and an external event (a meeting, etc.) is identified, the electronic device 100 may determine that it is the third situation.

The fourth situation indicates that it is a situation wherein the user is not around the device. For example, in case the position information of the device is not changed during a threshold time, the electronic device 100 may determine that it is the fourth situation.

The table 2220 in FIG. 22 indicates whether to provide notification information according to determined situations. In the first situation or the second situation, the electronic device 100 may provide notification information. In the third situation or the fourth situation, the electronic device 100 may not provide notification information.

For example, in case it was the fourth situation on a time point when a call non-connection event occurred but it is the first situation on the current time point, the electronic device 100 may provide notification information.

For example, in case it was the third situation on a time point when a call non-connection event occurred but it is the first situation on the current time point, the electronic device 100 may provide notification information.

For example, in case it was the fourth situation on a time point when a call non-connection event occurred but it is the third situation on the current time point, the electronic device 100 cannot provide notification information.

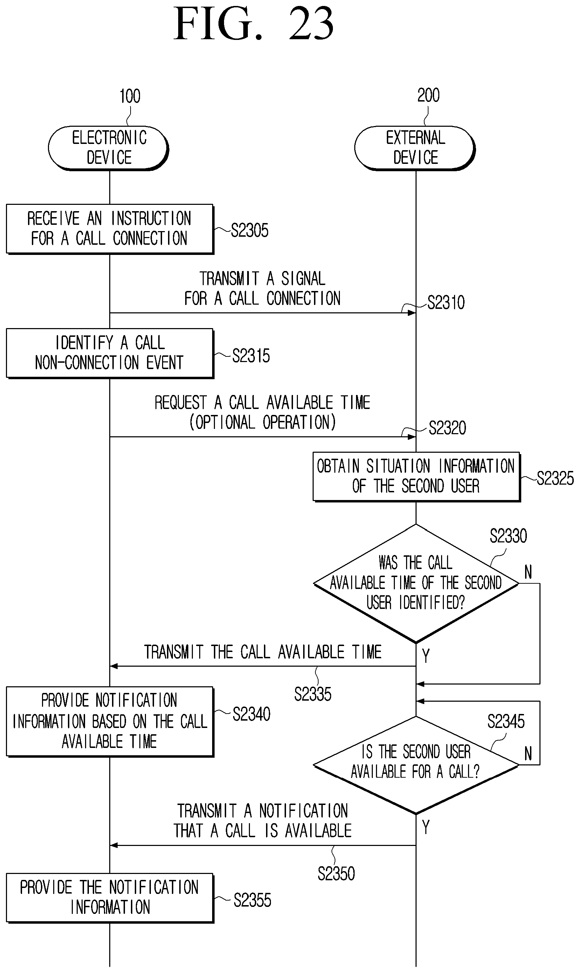

FIG. 23 is a flow chart for illustrating an operation of the electronic device 100 providi ng notification information based on information received from an external device.

Referring to FIG. 23, the electronic device 100 may receive an instruction for a call connection in the step S2305. The electronic device 100 may transmit a signal for a call connection to the external device 200 in the step S2310. After transmitting the signal for a call connection, the electronic device 100 may identify a call non-connection event in the step S2320. The electronic device 100 may request a call available time to the external device 200 in the step S2320. The electronic device 100 may transmit a signal for requesting a call available time to the second user of the external device 200 to the external device 200. The step S2320 is an optional operation, and can be omitted.

The external device 200 may receive a request for a call available time from the electronic device 100. The external device 200 may obtain situation information of the second user. The external device 200 may determine whether a call available time of the second user is identified based on the situation information in the step S2330. In case a call available time is identified in the step S2330-Y, the external device 200 may transmit the call available time to the electronic device 100 in the step S2335.

The electronic device 100 may receive the call available time from the external device 200. Then, the electronic device 100 may provide notification information based on the call available time in the step S2340.

In case the call available time is not identified in the step S2330-N, the external device 200 may determine whether the second user is available for a call in the step S2345. In case the second user is not available for a call in the step S2345-N, the external device 200 may repeatedly determine whether the second user is available for a call during a threshold time. In case the second user is available for a call in the step S2345-Y, the external device 200 may transmit a notification that a call is available to the electronic device 100 in the step S2350.

The electronic device 100 may receive the notification that a call is available from the external device 200. Then, the electronic device 100 may provide the notification information in the step S2355.

FIG. 24 is a diagram for illustrating notification information provided according to an importance level.

The table 2410 in FIG. 24 indicates a plurality of notification types. A first notification may be a notification that is provided to the electronic device during an event occurrence time. A second notification may be a notification that is provided to the electronic device during a reservation time. A third notification may be a notification that is provided to the electronic device during a call available time. A fourth notification may be a notification that is provided to an external device during an event occurrence time. A fifth notification may be a notification that is provided to an external device during a reservation time. A sixth notification may be a notification that is provided to an external device during a call available time.

The table 2420 in FIG. 24 indicates notifications that are provided according to importance levels.

If an importance level is 0 to 30, the electronic device 100 may not store information regarding a call non-connection event in the memory 110, and may not provide any notification. The electronic device 100 may determine that the event is spam or an unimportant event.

If an importance level is 31 to 40, the electronic device 100 may store information regarding a call non-connection event in the memory 110. The electronic device 100 may determine that the event is not an event for which a notification needs to be provided, but it is necessary to store information regarding the event in the memory 110. The information stored in the memory 110 may be used in a process of updating the parameters later.

If an importance level is 41 to 50, the electronic device 100 may store information regarding a call non-connection event in the memory 110, and provide the first notification.

If an importance level is 51 to 60, the electronic device 100 may store information regarding a call non-connection event in the memory 110, and provide the first notification and the second notification.

If an importance level is 61 to 70, the electronic device 100 may store information regarding a call non-connection event in the memory 110, and provide the first notification to the third notification.

If an importance level is 71 to 80, the electronic device 100 may store information regarding a call non-connection event in the memory 110, and provide the first notification to the third notification, and transmit the fourth notification to the external device 200.

If an importance level is 81 to 90, the electronic device 100 may store information regarding a call non-connection event in the memory 110, and provide the first notification to the third notification, and transmit the fourth notification and the fifth notification to the external device 200.

If an importance level is 91 to 100, the electronic device 100 may store information regarding a call non-connection event in the memory 110, and provide the first notification to the third notification, and transmit the fourth notification to the sixth notification to the external device 200.

Meanwhile, the electronic device 100 may perform various notification providing operations other than the embodiment in the table 2420.

FIG. 25 is a diagram for illustrating an operation of providing notification information according to various embodiments.

The UI 2510 in FIG. 25 may be a screen that is provided as notification information. The electronic device 100 may provide notification information including the UI 2510 according to a call non-connection event.

The UI 2510 may include at least one of a text 2511 indicating that notification information according to a call non-connection event is provided, user information 2512 corresponding to an important call, a text 2513 indicating that a call non-connection event occurred, a text 2514 indicating a detailed reason for the call non-connection event, a message of the counterpart 2515 related to the call non-connection event, a call available time with the counterpart 2516, or a text 2517 indicating a later notification schedule.

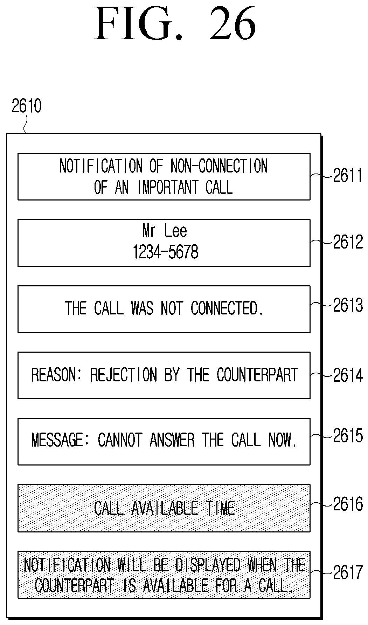

FIG. 26 is a diagram for illustrating an operation of providing notification information according to various embodiments.

The UI items 2611, 2612, 2613, 2614, 2615 in FIG. 26 may correspond to the UI items 2511, 2512, 2513, 2514, 2515 in FIG. 25. Accordingly, overlapping explanation will be omitted.

The UI 2610 may not correctly include a call available time 2616 related to a call non-connection event. This is because information regarding a call available time was not received from the counterpart. The electronic device 100 may display a notification if the counterpart is available for a call. The UI 2610 may include a text 2617 indicating that a notification will be displayed when the counterpart is available for a call.

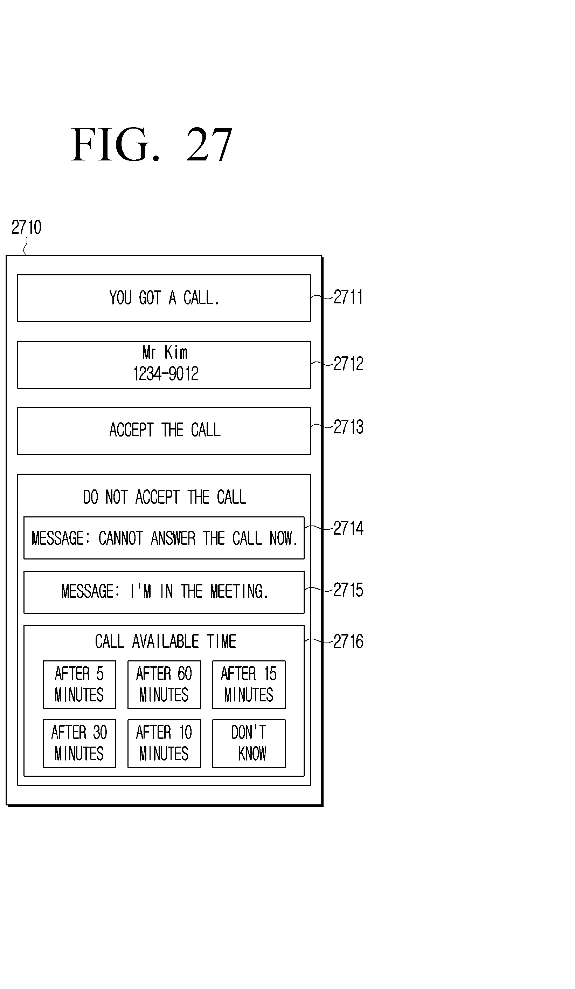

FIG. 27 is a diagram for illustrating a user interface (UI) displayed during a call connection according to various embodiments.

The UI 2710 in FIG. 27 may be a screen that is displayed in case an attempt for a call connection is received.

The UI 2710 may include at least one of a text 2711 notifying the fact that a call was received, user information 2712 corresponding to the counterpart requesting the call, an item 2713 for accepting the call, items 2714, 2715 for transmitting a reason for non-acceptance of the call as messages, or an item 2716 for transmitting a call available time. In case the items 2714, 2715, 2716 are selected, a call rejection signal may automatically be transmitted to the counterpart.

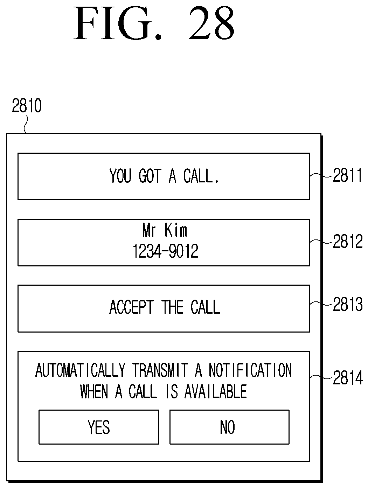

FIG. 28 is a diagram for illustrating a user interface (UI) displayed during a call connection according to various embodiments.

The UI items 2811, 2812, 2813 in FIG. 28 may correspond to the UI items 2711, 2712, 2713 in FIG. 27. Accordingly, overlapping explanation will be omitted.

The UI 2810 may include an item 2814 requesting a user input regarding whether to transmit an automatic notification when a call is available. When a user input is received through the item 2814, notification information may be provided on a time point when a call is available. In case the item 2814 is selected, a call rejection signal may automatically be transmitted to the counterpart.

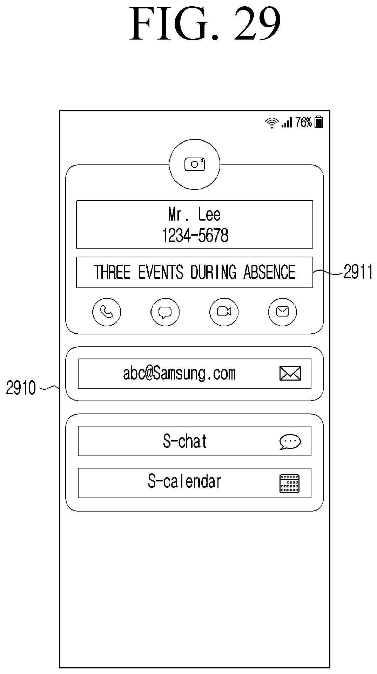

FIG. 29 is a diagram for illustrating an operation of providing notification information according to various embodiments.

The UI 2910 in FIG. 29 may be a screen that is provided as notification information. The electronic device 100 may provide notification information including the UI 2910 according to a call non-connection event.

The UI 2910 may include information regarding a counterpart (e.g., Mr. Lee) related to the call non-connection event. Also, the UI 2910 may include an item 2911 indicating the accumulated number of times for the call non-connection event regarding the counterpart related to the call non-connection event. If a call non-connection event was identified, and a call connection was performed within a threshold time (30 minutes), the electronic device 100 may change (reduce) the accumulated number of times. If a user input selecting the item 2911 is received, the electronic device 100 may provide a screen attempting a call connection to the counterpart. If a user input selecting the item 2911 is received and a call connection with the counterpart succeeds, the electronic device 100 may initialize the accumulated number of times.

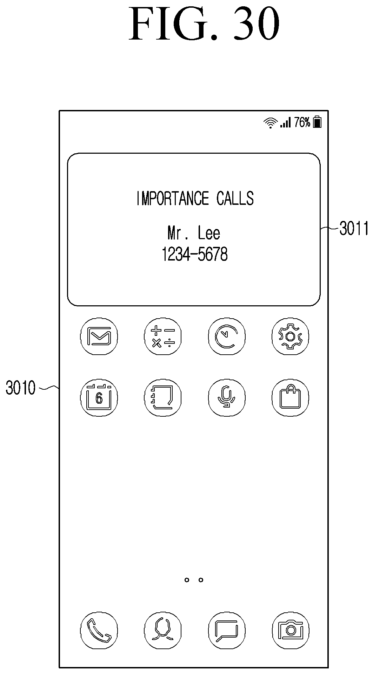

FIG. 30 is a diagram for illustrating an operation of providing notification information according to various embodiments.

The UI 3010 in FIG. 30 may be a screen that is provided as notification information. The electronic device 100 may provide notification information including the UI 3010 according to a call non-connection event.

The UI 3010 may include notification information in the form of a pop-up 3011. While a screen related to a predetermined application is being displayed, notification information in the form of a pop-up 3011 may be provided in the upper part of the screen.

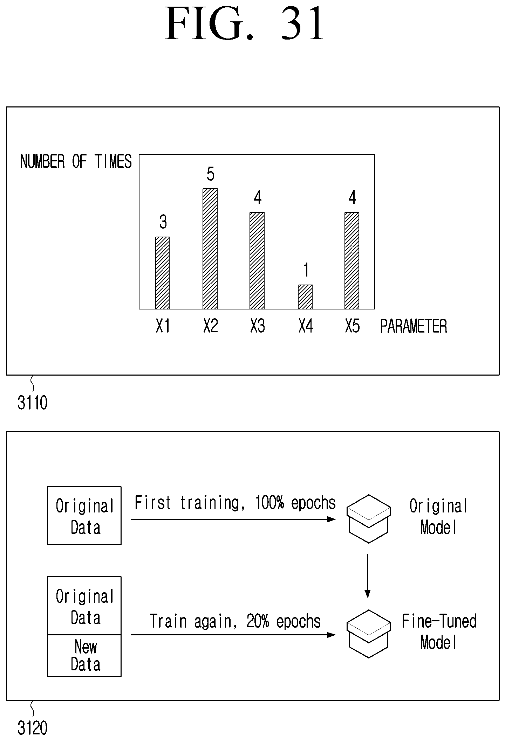

FIG. 31 is a diagram for illustrating an operation of updating an existing notification information provision model by obtaining parameters.

The graph 3110 in FIG. 31 may mean the number of times that data related to parameters is stored. The graph 3110 may indicate that data corresponding to the x1 parameter was stored three times, and data corresponding to the x2 parameter was stored five times, and data corresponding to the x3 parameter was stored four times, and data corresponding to the x4 parameter was stored once, and data corresponding to the x5 parameter was stored four times.

The electronic device 100 may determine a weight corresponding to a parameter based on the accumulated number of times of data corresponding to the parameter.

The embodiment 3120 in FIG. 31 indicates that the notification information provision model is updated as new data is stored. When new data is obtained, the notification information provision model may be updated based on the new data. The electronic device 100 may divide types of parameters corresponding to new data (x1 to x10 in FIG. 19). Then, the electronic device 100 may update the accumulated number of times for each type of the parameters. Then, the electronic device 100 may update weights corresponding to the parameters based on the updated accumulated number of times. As a result, the electronic device 100 may perform an updating operation by changing the weights of the existing model.

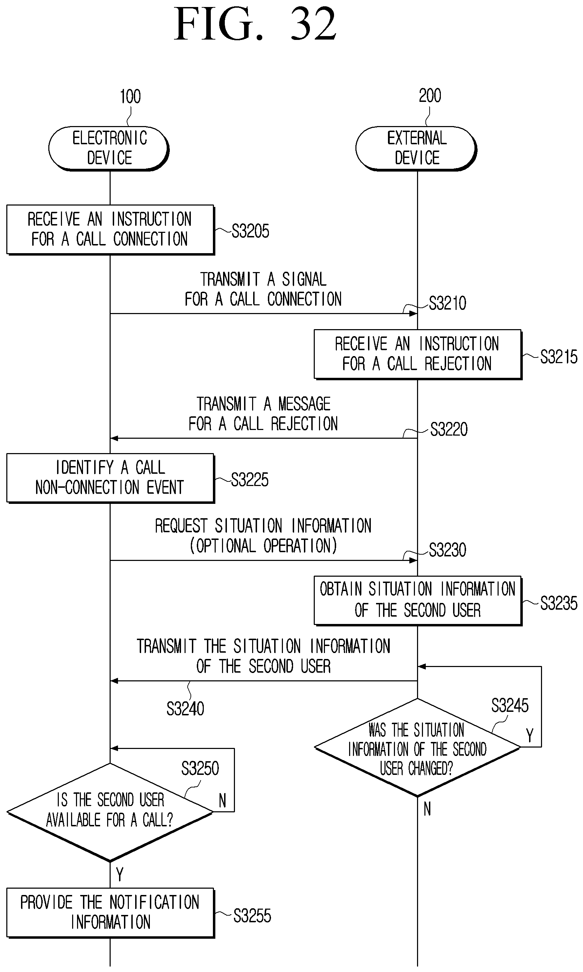

FIG. 32 is a flow chart for illustrating an operation of providing notification information by using situation information of a user of an external device.

Referring to FIG. 32, the electronic device 100 may receive an instruction for a call connection in the step S3205. The electronic device 100 may transmit a signal for a call connection to the external device 200 in the step S3210.

The external device 200 may receive the signal for a call connection from the electronic device 100. The external device 200 may receive the instruction for a call connection in the step S3215. The external device 200 may transmit a message for a call rejection to the electronic device 100 in the step S3220.

The electronic device 100 may receive the message for a call rejection from the external device 200. When the message for a call rejection is received, the electronic device 100 may identify that a call non-connection event occurred in the step S3225. The electronic device 100 may request situation information to the external device 200 in the step S3230. The situation information may mean the situation of the second user using the external device 200.

The external device 200 may receive the request for situation information from the electronic device 100. The external device 200 may obtain the situation information of the second user in the step S3235. The external device 200 may transmit the situation information of the second user to the electronic device 100 in the step S3240.

The electronic device 100 may receive the situation information of the second user from the external device 200. The electronic device 100 may identify whether the second user is available for a call based on the received situation information in the step S3250. In case the second user is not available for a call in the step S3250-N, the electronic device 100 may repeatedly determine whether the second user is available for a call during the threshold time.

In case the second user is available for a call in the step S3250-Y, the electronic device 100 may provide notification information in the step S3255.

The external device 200 may identify whether the situation information of the second user is changed in the step S3245. If the situation information is changed in the step S3245-Y, the external device 200 may transmit the situation information of the second user to the electronic device 100 again in the step S3240. Then, the electronic device 100 may perform the steps S3250 to S3255.

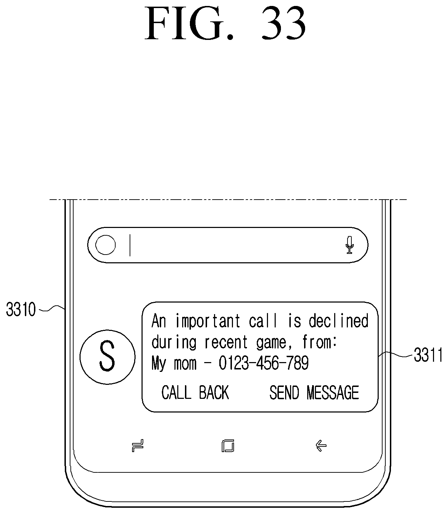

FIG. 33 is a diagram for illustrating an operation of providing notification information according to various embodiments.

The UI 3310 in FIG. 33 may be a screen that is provided as notification information. The electronic device 100 may provide notification information including the UI 3310 according to a call non-connection event.

The UI 3310 may include notification information in the form of a pop-up 3311. While a screen related to a predetermined application is being displayed, the notification information in the form of a pop-up 3311 may be provided in the lower part of the screen.

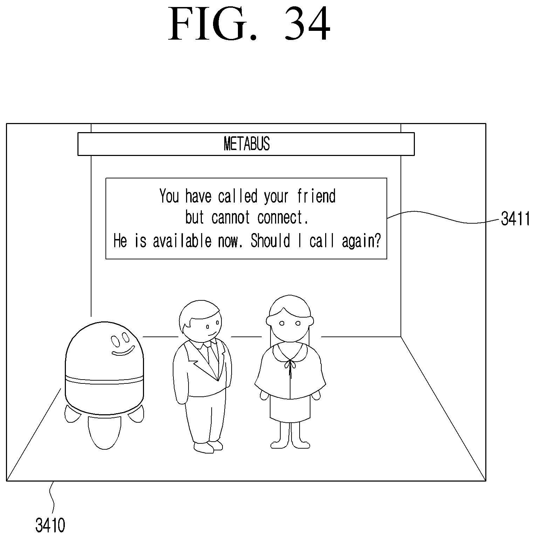

FIG. 34 is a diagram for illustrating an operation of providing notification information according to various embodiments.

The UI 3410 in FIG. 34 may be a screen that is provided as notification information. The electronic device 100 may provide notification information including the UI 3410 according to a call non-connection event.

The UI 3410 may include notification information 3411 that is provided in a virtual environment provided by a metaverse service. It is assumed that the first user of the electronic device 100 is using a metaverse service. The electronic device 100 may identify a call non-connection event. The electronic device 100 may provide an application related to the metaverse service such that the notification information 3411 is provided in the metaverse service but not a separate pop-up according to a predetermined event.

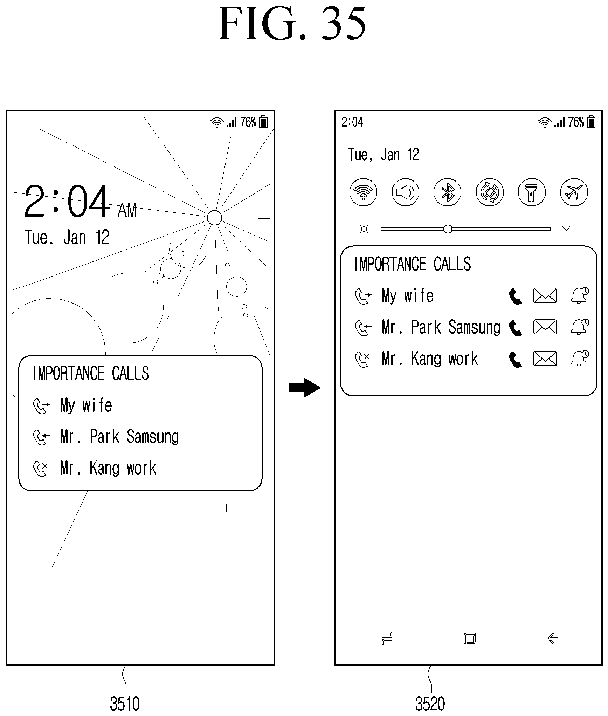

FIG. 35 is a diagram for illustrating an operation of providing notification information according to various embodiments.

The screen 3510 in FIG. 35 indicates notification information that is provided in a lock screen state. If the electronic device 100 is in the lock screen state on a time point of providing notification information, the electronic device 100 may control the display in a turned-on state, and provide the notification information. In case the user releases the lock screen and activates the top control bar after the screen 3510 is displayed, a screen 3520 may be provided.

The screen 3520 in FIG. 35 indicates notification information that is provided as a user input activating the top control bar is received. The user input may mean an input for touching the upper area of the screen and dragging it to the lower direction.

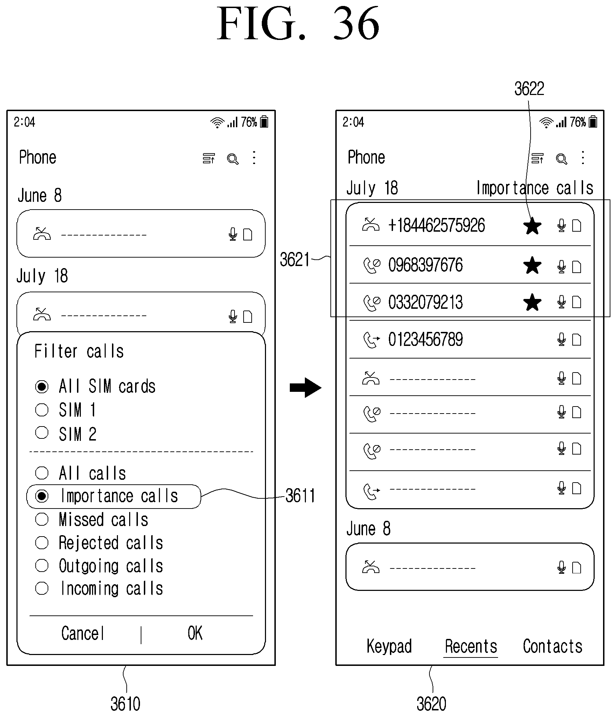

FIG. 36 is a diagram for illustrating an operation of providing notification information according to various embodiments.

The screen 3610 in FIG. 36 may include guide items provided to the user for filtering information related to a call non-connection event (e.g., a phone number, a name). In case the user selects an item 3611 corresponding to an important call, the electronic device 100 may identify an event corresponding to an important call among a plurality of call non-connection events.

Then, the electronic device 100 may display information about the identified event (e.g., a phone number, a name) in a separate area 3621. Also, the electronic device 100 may display an icon 3622 corresponding to the identified event in the area indicating the identified event.

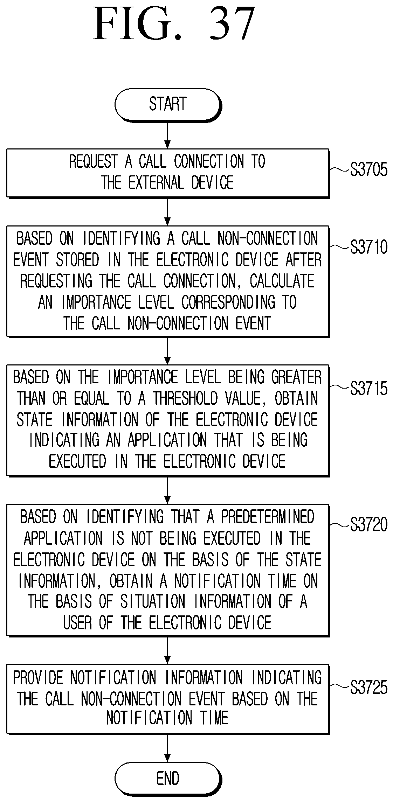

FIG. 37 is a flow chart for illustrating a method of controlling the electronic device 100 according to various embodiments.

Referring to FIG. 37, a method of controlling the electronic device 100 according to an embodiment of the disclosure may include the steps of requesting a call connection to the external device 200 (S3705), and based on identifying a call non-connection event stored in the electronic device 100 after requesting the call connection, calculating an importance level corresponding to the call non-connection event (S3710), and based on the importance level being greater than or equal to a threshold value, obtaining state information of the electronic device 100 indicating an application that is being executed in the electronic device 100 (S3715), and based on identifying that a predetermined application is not being executed in the electronic device 100 on the basis of the state information, obtaining a notification time on the basis of situation information of a user of the electronic device 100 (S3720), and providing notification information indicating the call non-connection event based on the notification time (S3725).

Meanwhile, in the step S3710 of obtaining the importance level, if the call non-connection event is identified, at least one of contact number level information for the external device 200 or communication frequency with the external device 200 may be obtained, and the importance level may be calculated based on at least one of the contact number level information or the communication frequency.

Meanwhile, in the step S3710 of obtaining the importance level, if the call non-connection event is identified, a first parameter corresponding to the contact number level information and a second parameter corresponding to the communication frequency may be obtained, and the importance level may be calculated based on the first parameter, a first weight corresponding to the first parameter, the second parameter, and a second weight corresponding to the second parameter.

Meanwhile, in the step S3710 of obtaining the importance level, a category of the call non-connection event may be identified, and the importance level may be calculated based on the identified category, and the category may include at least one of an event during absence, a rejection event, or a connection failure event.

Meanwhile, the predetermined application may be an application that performs a funct ion that cannot be performed simultaneously with a call connection function.

Meanwhile, in the step S3720 of obtaining the notification time, based on identifying that the predetermined application is not being executed, it may be identified whether an input of the user was received from the external device 200 within a threshold time, and based on identifying that an input of the user was received from the external device 200 within the threshold time, the notification time may be set as the current time point.

Meanwhile, in the step S3720 of obtaining the notification time, based on identifying that the predetermined application is not being executed, schedule information of the user may be obtained, and based on a schedule reserved on the current time point not existing on the basis of the schedule information of the user, the notification time may be set as the current time point, and based on a schedule reserved on the current time point existing on the basis of the schedule information of the user, the notification time may be set as a time point when the reserved schedule passed.

Meanwhile, in the controlling method, based on receiving a user input for a call connection with the external device 200 through the notification information, a call connection with the external device 200 may be re-requested.

Meanwhile, the notification information may include at least one of a reason for the call non-connection event, a message received from the external device 200, an available call time, or a notification time.

Meanwhile, in the step S3725 of providing the notification information, an available call time may be received from the external device 200, and the notification information including the available call time may be provided.

Meanwhile, the controlling method of an electronic device as in FIG. 37 may be executed on an electronic device having the configuration as in FIG. 1 or FIG. 2, and may also be executed on electronic devices having other configurations.

Meanwhile, methods according to the aforementioned various embodiments of the disclosure may be implemented in forms of applications that can be installed on conventional electronic devices.

Also, the methods according to the aforementioned various embodiments of the disclosure may be implemented just with software upgrade, or hardware upgrade for a conventional electronic device.

In addition, the aforementioned various embodiments of the disclosure may also be performed through an embedded server provided on an electronic device, or an external server of at least one of an electronic device or a display device.

Meanwhile, according to an embodiment of the disclosure, the aforementioned various embodiments may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments. In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. The term 'non-transitory' only means that a storage medium does not include signals, and is tangible, but does not indicate whether data is stored in the storage medium semi-permanently or temporarily.

Also, according to an embodiment of the disclosure, the methods according to the aforementioned various embodiments may be provided while being included in a computer program product. A computer program product refers to a product, and it can be traded between a seller and a buyer. A computer program product can be distributed on-line in the form of a storage medium that is readable by machines (e.g.: compact disc read only memory (CD-ROM)), or through an application store (e.g.: Play Store^{™}). In the case of on-line distribution, at least a portion of a computer program product may be stored in a storage medium such as the server of the manufacturer, the server of the application store, and the memory of the relay server at least temporarily, or may be generated temporarily.

Further, each of the components according to the aforementioned various embodiments (e.g. a module or a program) may consist of a singular object or a plurality of objects. Also, among the aforementioned corresponding sub components, some sub components may be omitted, or other sub components may be further included in the various embodiments. Alternatively or additionally, some components (e.g. a module or a program) may be integrated as an object, and perform the functions that were performed by each of the components before integration identically or in a similar manner. A module, a program, or operations performed by other components according to the various embodiments may be executed sequentially, in parallel, repetitively, or heuristically. Or, at least some of the operations may be executed in a different order or omitted, or other operations may be added.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic device comprising:
memory;
a communication interface;
a display; and
at least one processor configured to:
request a call connection to an external device via the communication interface,
based on identifying a call non-connection event stored in the memory after requesting the call connection, calculate an importance level corresponding to the call non-connection event,
based on the importance level being greater than or equal to a threshold value, obtain state information of the electronic device indicating an application that is being executed in the electronic device,
based on identifying that a predetermined application is not being executed in the electronic device on the basis of the state information, obtain a notification time on the basis of situation information of a user of the external device, and
control the display to provide notification information indicating the call non-connection event based on the notification time.

2. The electronic device of claim 1,
wherein the at least one processor is configured to:
based on identifying the call non-connection event, obtain at least one of contact number level information for the external device or communication frequency with the external device, and
calculate the importance level based on at least one of the contact number level information or the communication frequency.

3. The electronic device of claim 2,
wherein the at least one processor is configured to:
based on identifying the call non-connection event, obtain a first parameter corresponding to the contact number level information and a second parameter corresponding to the communication frequency, and
calculate the importance level based on the first parameter, a first weight corresponding to the first parameter, the second parameter, and a second weight corresponding to the second parameter.

4. The electronic device of claim 1,
wherein the at least one processor is configured to:
identify a category of the call non-connection event, and
calculate the importance level based on the identified category, and
the category comprises:
at least one of an absence event, a rejection event, or a connection failure event.

5. The electronic device of claim 1,
wherein the predetermined application is an application that performs a function that cannot be performed simultaneously with a call connection function.

6. The electronic device of claim 1,
wherein the at least one processor is configured to:
based on identifying that the predetermined application is not being executed, identify whether an input of the user was received from the external device within a threshold time, and
based on identifying that an input of the user was received from the external device within the threshold time, set the notification time as the current time point.

7. The electronic device of claim 6,
wherein the at least one processor is configured to:
based on identifying that the predetermined application is not being executed, obtain schedule information of the user,
based on a schedule reserved on the current time point not existing on the basis of the schedule information of the user, set the notification time as the current time point,
and based on a schedule reserved on the current time point existing on the basis of the schedule information of the user, set the notification time as a time point when the reserved schedule passed.

8. The electronic device of claim 1,
wherein the at least one processor is configured to:
based on receiving a user input for a call connection with the external device through the notification information, re-request a call connection with the external device through the communication interface.

9. The electronic device of claim 1,
wherein the notification information comprises:
at least one of a reason for the call non-connection event, a message received from the external device, a call available time, or a notification time.

10. The electronic device of claim 1,
wherein the at least one processor is configured to:
receive a call available time from the external device through the communication interface, and
control the display to provide the notification information including the call available time.

11. A method of controlling an electronic device, the method comprising:
requesting a call connection to an external device;
based on identifying a call non-connection event stored in the electronic device after requesting the call connection, calculating an importance level corresponding to the call non-connection event;
based on the importance level being greater than or equal to a threshold value, obtaining state information of the electronic device indicating an application that is being executed in the electronic device;
based on identifying that a predetermined application is not being executed in the electronic device on the basis of the state information, obtaining a notification time on the basis of situation information of a user of the external device; and
providing notification information indicating the call non-connection event based on the notification time.

12. The controlling method of claim 11,
wherein the obtaining the importance level comprises:
based on identifying the call non-connection event, obtaining at least one of contact number level information for the external device or communication frequency with the external device; and
calculating the importance level based on at least one of the contact number level information or the communication frequency.

13. The controlling method of claim 12,
wherein the obtaining the importance level comprises:
based on identifying the call non-connection event, obtaining a first parameter corresponding to the contact number level information and a second parameter corresponding to the communication frequency; and
calculating the importance level based on the first parameter, a first weight corresponding to the first parameter, the second parameter, and a second weight corresponding to the second parameter.

14. The controlling method of claim 11,
wherein the obtaining the importance level comprises:
identifying a category of the call non-connection event; and
calculating the importance level based on the identified category, and
the category comprises:
at least one of an absence event, a rejection event, or a connection failure event.

15. The controlling method of claim 11,
wherein the predetermined application is an application that performs a function that cannot be performed simultaneously with a call connection function.
